(19) **Europäisches Patentamt**
**European Patent Office**
**Office européen des brevets**

(11) **EP 4 557 711 A1**

(12) **EUROPEAN PATENT APPLICATION**
published in accordance with Art. 153(4) EPC

(43) Date of publication:
**21.05.2025 Bulletin 2025/21**

(21) Application number: **24830558.3**

(22) Date of filing: **18.06.2024**

(51) International Patent Classification (IPC):
***H04M 1/02*** *(2006.01)*

(52) Cooperative Patent Classification (CPC):
**H04M 1/02**

(86) International application number:
**PCT/CN2024/099763**

(87) International publication number:
**WO 2025/001912 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.06.2023  CN 202310802738
28.11.2023  CN 202311615641

(71) Applicant: **Huawei Technologies Co., Ltd.**
**Shenzhen, Guangdong 518129 (CN)**

(72) Inventors:
• **WANG, Jikang**
**Shenzhen, Guangdong 518129 (CN)**

• **GONG, Yiwen**
**Shenzhen, Guangdong 518129 (CN)**
• **YU, Dong**
**Shenzhen, Guangdong 518129 (CN)**
• **ZHAN, Zhixin**
**Shenzhen, Guangdong 518129 (CN)**
• **ZHANG, Yun**
**Shenzhen, Guangdong 518129 (CN)**
• **ZHANG, Jinglei**
**Shenzhen, Guangdong 518129 (CN)**
• **LU, Liang**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **ELECTRONIC DEVICE AND ANTENNA SWITCHING METHOD**

(57)    This application provides an electronic device and an antenna switching method. The electronic device includes a first antenna, a second antenna, and a controller. When the electronic device is in different communication states, the controller may set some radiators as parasitic branches based on the different communication states, to improve communication performance of the electronic device.

FIG. 33

## Description

This application claims priorities to Chinese Patent Application No. 202310802738.9, filed with the China National Intellectual Property Administration on June 30, 2023, and entitled "ELECTRONIC DEVICE AND ANTENNA SWITCHING METHOD", and to Chinese Patent Application No. 202311615641.3, filed with the China National Intellectual Property Administration on November 28, 2023, and entitled "ELECTRONIC DEVICE AND ANTENNA SWITCHING METHOD", both of which are incorporated herein by reference in their entireties.

## TECHNICAL FIELD

This application relates to the wireless communication field, and in particular, to an electronic device and an antenna switching method.

## BACKGROUND

As people's demands for high-speed data transmission increase, a development trend of an industrial design (industrial design, ID) of electronic devices is to have a large screen-to-body ratio and a plurality of cameras. Consequently, antenna clearance is greatly reduced, and layout space is increasingly limited.

Currently, communication bands of electronic devices include a 3rd generation mobile communication technology (3rd generation wireless systems, 3G) band, a 4th generation mobile communication technology (4th generation wireless systems, 4G) band, and a 5th generation mobile communication technology (5th generation wireless systems, 5G) band. In an existing antenna layout, how to improve communication quality of an electronic device is an urgent problem to be resolved.

## SUMMARY

Embodiments of this application provide an electronic device and an antenna switching method. The electronic device includes a first antenna, a second antenna, and a controller. When the electronic device is in different communication states, the controller may set some radiators as parasitic branches based on the different communication states, to improve communication performance of the electronic device.

According to a first aspect, an electronic device is provided, including: a ground; a frame, where at least a part of the frame is spaced from the ground, the frame includes a first location, a second location, a third location, and a fourth location that are successively provided, and the second location and the third location are on a first side of the frame; a first antenna, where an operating band of the first antenna includes a first band, and the first antenna includes: a first radiator, where the first radiator includes a conductive part of the frame between the first location and the second location; a second antenna, where operating bands of the second antenna include a second band and a third band, and the second antenna includes: a second radiator, where the second radiator includes a conductive part of the frame between the third location and the fourth location; and a first tuning circuit, where the second radiator includes a first connection point, and the first tuning circuit is coupled between the first connection point and the ground. The first band and the second band are the same or adjacent. When the first antenna operates on the first band, the first tuning circuit switches an operating band of the second antenna from the second band to the third band. According to this embodiment of this application, when the first antenna operates on the first band, if the second antenna operates on the second band, because the first band and the second band are the same or adjacent, and the second location and the third location are on the first side of the frame, interference caused by the second antenna to the first antenna is strong, and consequently a radiation characteristic (for example, radiation efficiency) of the first antenna deteriorates. When the first antenna operates on the first band, if the second antenna operates on the third band, the second antenna does not interfere with the first antenna, so that the radiation characteristic of the first antenna is improved.

With reference to the first aspect, in some implementations of the first aspect, the frame is coupled to the ground at the first location, the third location, and the fourth location, and the frame is provided with a first slot at the second location; and the second radiator is provided with a second slot between the third location and the fourth location.

According to this embodiment of this application, a first end of the first radiator is a grounding end (an end at the first location), and a second end of the first radiator is an open end (an end at the second location). Both a first end and a second end of the second radiator are grounding ends. Structures of the first antenna and the second antenna may be determined based on actual production or design. This is not limited in this application.

With reference to the first aspect, in some implementations of the first aspect, a length of the frame between the second location and the third location is less than or equal to a first wavelength, and the first wavelength is a wavelength corresponding to the first band.

With reference to the first aspect, in some implementations of the first aspect, the length of the frame between the second location and the third location is less than or equal to 90 mm.

According to this embodiment of this application, when the second location and the third location are within the foregoing range, the first antenna and the second antenna have strong interference on a same band or adjacent bands. With reference to the first aspect, in some implementations of the first aspect, the second location coincides with the third location; the frame is coupled to the ground at the first location, and the frame is provided with a first slot and a second slot at the second location and the fourth location; and a first end of the first radiator and a first end of the second radiator are opposite to each other through the first slot and are not in contact with each other, the first end of the first radiator is an open end, and the first end of the second radiator is a grounding end.

With reference to the first aspect, in some implementations of the first aspect, the electronic device further includes a first modem, a second modem, and a second tuning circuit; the first radiator includes a second connection point, and the second tuning circuit is connected between the second connection point and the ground; the first modem is electrically connected to the first tuning circuit, and the first modem is configured to control the first tuning circuit to switch the operating band of the second antenna; the second modem is electrically connected to the second tuning circuit, and the second modem is configured to control the second tuning circuit to switch the operating band of the first antenna; and the first band includes a partial communication band in a non-cellular network, and the second band includes a partial communication band in a cellular network. According to this embodiment of this application, the first band and the second band may be communication bands in different communication systems.

With reference to the first aspect, in some implementations of the first aspect, the electronic device further includes an application processor AP and the first modem; the AP is electrically connected to the first modem; the first modem is electrically connected to the first tuning circuit; and that the first tuning circuit switches an operating band of the second antenna from the second band to the third band includes: The AP sends switching information to the first modem; and the first modem controls, based on the switching information, the first tuning circuit to switch the operating band of the second antenna from the second band to the third band.

With reference to the first aspect, in some implementations of the first aspect, the first band is a 2.4G band in Wi-Fi, and the second band is B40 or B41 in the cellular network, or the first band is an L1 band in GPS, and the second band is B3 in the cellular network; and when the electronic device enables the first band, the operating band of the second antenna is switched from the second band to the third band.

According to this embodiment of this application, B3 (1.71 to 1.785 GHz) and L1 (1578.42±1.023 MHz) are adjacent bands, and B40 (2.3 to 2.4 GHz) or B41 (2.496 to 2.69 GHz) and a Wi-Fi/BT band (2.4 to 2.485 GHz) are adjacent bands.

According to a second aspect, an electronic device is provided, including: a ground; a frame, where at least a part of the frame is spaced from the ground, the frame includes a first location, a second location, and a third location that are successively provided, and the frame is coupled to the ground at the second location; a first antenna, where an operating band of the first antenna includes a first band, and the first antenna includes: a first radiator, where the first radiator includes a conductive part of the frame between the first location and the second location; a second antenna, where operating bands of the second antenna include a second band and a third band, and the second antenna includes: a second radiator, where the second radiator includes a conductive part of the frame between the second location and the third location; and a tuning circuit, where the second radiator includes a connection point, and the tuning circuit is coupled between the connection point and the ground. The first band and the second band are the same or adjacent. When the first antenna operates on the first band, the tuning circuit switches an operating band of the second antenna from the third band to the second band.

According to this embodiment of this application, when the first antenna operates on the first band, if the second antenna operates on the second band, because the first band and the second band are the same or adjacent, when the first radiator generates a main resonance, the second radiator may be excited to generate a parasitic resonance, and a radiation characteristic (for example, radiation efficiency or operating bandwidth) of the first antenna is improved by using the parasitic resonance. With reference to the second aspect, in some implementations of the second aspect, the frame is coupled to the ground at the first location, and the frame is provided with a first slot at the third location; and the first radiator is provided with a second slot between the first location and the second location.

With reference to the second aspect, in some implementations of the second aspect, the first band and the second band are communication bands in a range of 698 MHz to 960 MHz, or communication bands in a range of 1710 MHz to 2170 MHz, or communication bands in a range of 2300 MHz to 2690 MHz.

With reference to the second aspect, in some implementations of the second aspect, the electronic device further includes a modem, and the modem is electrically connected to the tuning circuit; and that the tuning circuit switches an operating band of the second antenna from the third band to the second band includes: The modem controls the tuning circuit to switch the operating band of the second antenna from the third band to the second band.

According to a third aspect, an electronic device is provided, including: a first antenna, including a first tuning circuit; a second antenna, including a second tuning circuit; a first switch, where a connection port of the first switch is electrically connected to the first tuning circuit; a first modem, where a first port of the first modem is electrically connected to a control port of the first switch, and a second port of the first modem is electrically connected to a first switching port of the first switch; and a second modem, where a first port of the second modem is electrically connected to a second switching port of the first switch, and a second port of the second modem is electrically connected to the second tuning circuit.

With reference to the third aspect, in some implementations of the third aspect, the control port of the first switch is configured to switch an electrical connection status between the connection port of the first switch and the first switching port of the first switch, or control an electrical connection status between the connection port of the first switch and the second switching port of the first switch.

With reference to the third aspect, in some implementations of the third aspect, the electronic device further includes a second switch; and a connection port of the second switch is electrically connected to the second tuning circuit, a first switching port of the second switch is electrically connected to a third port of the first modem, a second switching port of the second switch is electrically connected to the second port of the second modem, and a third port of the second modem is electrically connected to a control port of the second switch.

With reference to the third aspect, in some implementations of the third aspect, an operating band of the first antenna includes a partial communication band in a non-cellular network, and an operating band of the second antenna includes a partial communication band in a cellular network. With reference to the third aspect, in some implementations of the third aspect, the electronic device further includes an application processor AP and a controller; a first port of the AP is electrically connected to a first port of the controller, and a second port of the AP is electrically connected to a fourth port of the first modem; and a second port of the controller is electrically connected to a fourth port of the second modem.

With reference to the third aspect, in some implementations of the third aspect, the operating band of the first antenna is a 2.4G band in Wi-Fi or an L1 band in GPS, and the operating band of the second antenna is a communication band in a range of 1710 MHz to 2170 MHz or a communication band in a range of 2300 MHz to 2690 MHz.

According to a fourth aspect, an electronic device is provided, including: a first antenna, including a first tuning circuit; a second antenna, including a second tuning circuit; and a first modem and a second modem, where a first port of the first modem is electrically connected to a first port of the second modem, a second port of the second modem is electrically connected to the first tuning circuit, and a third port of the second modem is electrically connected to the second tuning circuit. With reference to the fourth aspect, in some implementations of the fourth aspect, an operating band of the first antenna includes a partial communication band in a non-cellular network, and an operating band of the second antenna includes a partial communication band in a cellular network. With reference to the fourth aspect, in some implementations of the fourth aspect, the electronic device further includes an application processor AP and a controller; a first port of the AP is electrically connected to a first port of the controller, and a second port of the AP is electrically connected to a fourth port of the first modem; and a second port of the controller is electrically connected to a fourth port of the second modem.

With reference to the fourth aspect, in some implementations of the fourth aspect, the operating band of the first antenna is a 2.4G band in Wi-Fi or an L1 band in GPS, and the operating band of the second antenna is a communication band in a range of 1710 MHz to 2170 MHz or a communication band in a range of 2300 MHz to 2690 MHz.

**BRIEF DESCRIPTION OF DRAWINGS**

FIG. 1 is a diagram of a structure of a foldable electronic device 100 according to an embodiment of this application;
FIG. 2 is a diagram of a structure of a foldable electronic device 100 in an outward folded state;
FIG. 3 is a diagram of a structure of a foldable electronic device 100 in a possible unfolded state;
FIG. 4 is a diagram of a structure of a foldable electronic device 100 in a possible folded state;
FIG. 5 is a diagram of a structure of a foldable electronic device 100 in a possible partially unfolded state;
FIG. 6 is a diagram of an electronic device 100 according to an embodiment of this application;
FIG. 7 is a diagram of an electronic device 100 according to an embodiment of this application;
FIG. 8 shows a simulation result of S parameters of a first antenna and a second antenna in the electronic device shown in FIG. 6;
FIG. 9 shows a simulation result of an S parameter of a second antenna when a first radiator in the electronic device shown in FIG. 6 is used as a parasitic branch;
FIG. 10 shows total efficiency and radiation efficiency of a second antenna in the electronic device shown in FIG. 6;
FIG. 11 is a diagram of an electronic device 100 according to an embodiment of this application;
FIG. 12 shows a simulation result of S parameters of a first antenna and a second antenna in the electronic device shown in FIG. 11;
FIG. 13 shows a simulation result of an S parameter of a second antenna when a first radiator in the electronic device shown in FIG. 11 is used as a parasitic branch;
FIG. 14 shows total efficiency and radiation efficiency of a second antenna in the electronic device shown in FIG. 11;
FIG. 15 is a diagram of an electronic device 100 according to an embodiment of this application;
FIG. 16 is a diagram of an electronic device 100 according to an embodiment of this application;

FIG. 17 shows a simulation result of S parameters of a second antenna and a third antenna when a first radiator in the electronic device shown in FIG. 11 is used as a parasitic branch;
FIG. 18 shows total efficiency and radiation efficiency of a second antenna in the electronic device shown in FIG. 11;
FIG. 19 is a diagram of a foldable electronic device 100 according to an embodiment of this application;
FIG. 20 shows a simulation result of an S parameter of a second antenna when a first radiator in the electronic device shown in FIG. 19 is used as a parasitic branch;
FIG. 21 shows total efficiency and radiation efficiency of a second antenna when a first radiator in the electronic device shown in FIG. 19 is used as a parasitic branch;
FIG. 22 shows a simulation result of an S parameter of a first antenna when a second radiator in the electronic device shown in FIG. 19 is used as a parasitic branch;
FIG. 23 shows total efficiency and radiation efficiency of a first antenna when a second radiator in the electronic device shown in FIG. 19 is used as a parasitic branch;
FIG. 24 is a diagram of a foldable electronic device 100 according to an embodiment of this application;
FIG. 25 shows a simulation result of an S parameter of a second antenna when a first radiator in the electronic device shown in FIG. 24 is used as a parasitic branch;
FIG. 26 shows total efficiency and radiation efficiency of a second antenna when a first radiator in the electronic device shown in FIG. 24 is used as a parasitic branch;
FIG. 27 shows a simulation result of an S parameter of a first antenna when a second radiator in the electronic device shown in FIG. 24 is used as a parasitic branch;
FIG. 28 shows total efficiency and radiation efficiency of a first antenna when a second radiator in the electronic device shown in FIG. 24 is used as a parasitic branch;
FIG. 29 is a diagram of a foldable electronic device 100 according to an embodiment of this application;
FIG. 30 shows total efficiency and radiation efficiency of a second antenna in the electronic device shown in FIG. 29;
FIG. 31 shows total efficiency and radiation efficiency of a third antenna in the electronic device shown in FIG. 29;
FIG. 32 is a diagram of an antenna switching method 400 according to an embodiment of this application;
FIG. 33 is a diagram of an electronic device 100 according to an embodiment of this application;
FIG. 34 shows a simulation result of S parameters of a first antenna and a second antenna shown in FIG. 33;

FIG. 35 shows a simulation result of radiation efficiency of a first antenna shown in FIG. 33;
FIG. 36 is a diagram of an electronic device 100 according to an embodiment of this application;
FIG. 37 shows a simulation result of radiation efficiency of a first antenna shown in FIG. 36;
FIG. 38 is a diagram of an electronic device 100 according to an embodiment of this application;
FIG. 39 is a diagram of an electronic device 100 according to an embodiment of this application;
FIG. 40 shows a simulation result of radiation efficiency of a first antenna shown in FIG. 38;
FIG. 41 is a diagram of an electronic device 100 according to an embodiment of this application;
FIG. 42 is a diagram of an electronic device 100 according to an embodiment of this application;
FIG. 43 is a diagram of an electronic device 100 according to an embodiment of this application; and
FIG. 44 is a diagram of an electronic device 100 according to an embodiment of this application.

## DESCRIPTION OF EMBODIMENTS

The following describes terms that may occur in embodiments of this application.

It should be understood that the term "and/or" in this specification is merely a same field for describing associated objects and represents that three relationships may exist. For example, A and/or B may represent the following three cases: Only A exists, both A and B exist, and only B exists. In addition, the character "/" in this specification usually indicates an "or" relationship between the associated objects.

In this application, "in a range of..." includes end values at both ends of the range by default except that it is separately indicated that an end value is not included. For example, a range of 1 to 5 includes the two values 1 and 5.

Coupling: may be understood as direct coupling and/or indirect coupling. A "coupling connection" may be understood as a direct coupling connection and/or an indirect coupling connection. The direct coupling may also be referred to as an "electrical connection", which may be understood as physical contact and electrical conductivity of components; or may be understood as a form in which different components in a line structure are connected by using a physical line that can transmit an electrical signal, like printed circuit board (printed circuit board, PCB) copper foil or a conducting wire. The "indirect coupling" may be understood as electrical conductivity of two conductors through space or in a non-touch manner. In an embodiment, the indirect coupling may also be referred to as capacitive coupling. For example, signal transmission is implemented by forming an equivalent capacitor through coupling of a gap between two conductive components. Element/component: includes at least one of a lumped element/component and a distributed element/component.

Lumped element/component: is a general term for all elements when a size of the element is far less than a wavelength corresponding to an operating frequency of a circuit. For signals, a characteristic of the element is always fixed at any moment, and is irrelevant to a frequency. Distributed element/component: Different from the lumped element, if a size of an element is close to or greater than a wavelength corresponding to an operating frequency of a circuit, when a signal passes through the element, a characteristic of each point of the element varies with the signal. In this case, the element cannot be considered as a single entity with a fixed characteristic, but should be referred to as a distributed element.

Capacitor: may be understood as a lumped capacitor and/or a distributed capacitor. The lumped capacitor is a capacitive component, for example, a capacitive element, and the distributed capacitor (or distributed capacitor) is an equivalent capacitor formed due to a gap between two conductive components.

Inductor: may be understood as a lumped inductor and/or a distributed inductor. The lumped inductor is an inductive component, for example, an inductive element, and the distributed inductor (or distributed inductor) is an equivalent inductor formed by using a conductive component with a specific length.

Radiator: is an apparatus configured to receive/send electromagnetic wave radiation in an antenna. In some cases, an "antenna" is a radiator in a narrow sense. The radiator converts guided wave energy from a transmitter into a radio wave, or converts a radio wave into guided wave energy, to radiate and receive a radio wave. Modulated high-frequency current energy (or guided wave energy) generated by the transmitter is transmitted to a transmit radiator through a feeder. The radiator converts the energy into specific polarized electromagnetic wave energy and radiates the energy in a required direction. A receive radiator converts specific polarized electromagnetic wave energy from a specific direction in space into modulated high-frequency current energy, and transmits the energy to an input end of a receiver through the feeder.

The radiator may include a conductor having a specific shape and size, for example, a linear conductor or a sheet-like conductor. A specific shape is not limited in this application. In an embodiment, the linear radiator may be referred to as a linear antenna for short. In an embodiment, the linear radiator may be implemented by a conductive frame, and may also be referred to as a frame antenna. In an embodiment, the linear radiator may be implemented by a support conductor, and may also be referred to as a bracket antenna. In an embodiment, a diameter (for example, including a thickness and a width) of a linear radiator or a radiator of a linear antenna is far less than a wavelength (for example, a medium wavelength) (for example, less than 1/16 of the wavelength), and a length may be compared with the wavelength (for example, the medium wavelength) (for example, the length is near 1/8 of the wavelength, or 1/8 to 1/4, or 1/4 to 1/2, or longer). Main forms of the linear antenna include a dipole antenna, a half-wave dipole antenna, a monopole antenna, a loop antenna, and an inverted F antenna (also referred to as IFA, Inverted F Antenna). For example, for the dipole antenna, each dipole antenna usually includes two radiation branches, and each branch is fed by a feeding part from a feeding end of the radiation branch. For example, the inverted F antenna (Inverted-F Antenna, IFA) may be considered as being obtained by adding a grounding path to the monopole antenna. The IFA antenna has a feedpoint and a grounding point. Because a side view of the IFA antenna is an inverted F shaped, the IFA antenna is referred to as an inverted F antenna. In an embodiment, the sheet-like radiator may include a microstrip antenna, or a patch (patch) antenna, for example, a planar inverted F antenna (also referred to as PIFA, Planar Inverted F Antenna). In an embodiment, the sheet-like radiator may be implemented by a planar conductor (for example, a conductive sheet or a conductive coating). In an embodiment, the sheet-like radiator may include a conductive sheet, for example, a copper sheet. In an embodiment, the sheet-like radiator may include a conductive coating, for example, silver paste. A shape of the sheet-like radiator includes a circle, a rectangle, a ring, or the like. A specific shape is not limited in this application. A structure of the microstrip antenna usually includes a dielectric substrate, a radiator, and a ground, where the dielectric substrate is disposed between the radiator and the ground.

The radiator may include a slot or a slit formed on a conductor, for example, a closed or semi-closed slot or slit formed on a surface of a grounded conductor. In an embodiment, a radiator with a slot or a slit may be referred to as a slotted antenna or a slot antenna for short. In an embodiment, a radial size (for example, including a width) of the slot or slit of the slotted antenna/slot antenna is far less than a wavelength (for example, a medium wavelength) (for example, less than 1/16 of the wavelength), and a length may be compared with the wavelength (for example, the medium wavelength) (for example, the length is near 1/8 of the wavelength, or 1/8 to 1/4, or 1/4 to 1/2, or longer). In an embodiment, a radiator with a closed slot or slit may be referred to as a closed slot antenna for short. In an embodiment, a radiator with a semi-closed slot or slit (for example, an opening is provided on a closed slot or slit) may be referred to as an open slot antenna for short. In some embodiments, a shape of the slot is a long strip. In some embodiments, a length of the slot is about half a wavelength (for example, a medium wavelength). In some embodiments, a length of the slot is about an integer multiple of a wavelength (for example, one time a medium wavelength). In some embodiments, the slot may be fed by a transmission line that is connected to one side or two sides of the slot. In this way, a radio frequency electromagnetic field is excited on the slot, and an electromagnetic wave is radiated to space. In an embodiment, a radiator of the slotted antenna or the slot antenna may be implemented by a conductive frame that is grounded at two ends, and may also be referred to as a frame antenna. In this embodiment, it may be considered that the slotted antenna or the slot antenna includes a linear radiator, and the linear radiator is spaced from the ground and is grounded at two ends of the radiator, to form a closed or semi-closed slot or slit. In an embodiment, a radiator of the slotted antenna or the slot antenna may be implemented by a support conductor that is grounded at two ends, and may also be referred to as a bracket antenna.

A feed circuit/feed structure is a combination of all components of an antenna for receiving and transmitting radio frequency waves. In some cases, a "feed circuit" is understood as a radio frequency chip (RFIC, frequency integrated circuit) in a narrow sense, or includes a transmission path from the radio frequency chip to a feedpoint on a radiator or a transmission line. In an embodiment, the feed circuit may include a radio frequency front-end circuit, configured to transmit a radio frequency signal (an analog signal). In an embodiment, the feed circuit is electrically connected to a baseband circuit, the baseband circuit is configured to transmit a baseband signal (a digital signal), and the baseband signal may be converted into a radio frequency signal by using an electronic element (for example, an RF IC) in the feed circuit. In an embodiment, the baseband circuit may include a modem, and the modem may be configured to perform up-conversion or down-conversion on the baseband signal. In an embodiment, a part of the radio frequency front-end circuit and a part of the baseband circuit may be disposed in one chip, or may be separately disposed in a radio frequency front-end chip and a baseband chip.

End/point: "End/point" in a first end/second end/feeding end/grounding end/feedpoint/grounding point/connection point of an antenna radiator cannot be understood in a narrow sense as an endpoint or an end part that is physically disconnected from another radiator, but may be further considered as a point or a segment on a continuous radiator. In an embodiment, the "end/point" may include a connection/coupling area that is on the antenna radiator and that is coupled to another conductive structure. For example, the feeding end/feedpoint may be a coupling area that is on the antenna radiator and that is coupled to a feed structure or a feed circuit (for example, an area face-to-face with a part of the feed circuit). For another example, the grounding end/-grounding point may be a connection/coupling area that is on the antenna radiator and that is coupled to a grounding structure or a grounding circuit.

Open end and closed end: In some embodiments, the open end/grounding end is, for example, relative to whether the end is grounded. The closed end is grounded, and the open end is not grounded. In some embodiments, the open end/closed end is, for example, relative to another conductor. The closed end is electrically connected to the another conductor, and the open end is not electrically connected to the another conductor. In an embodiment, the open end may also be referred to as a free end, an opening end, or an open-circuit end. In an embodiment, the closed end may also be referred to as a grounding end or a short-circuited end. It should be understood that, in some embodiments, another conductor may be coupled by using the open end, to transfer coupling energy (which may be understood as transferring a current).

Resonance/resonance frequency: The resonance frequency is also referred to as a resonant frequency. The resonance frequency may be a frequency at which an imaginary part of an antenna input impedance is zero. The resonance frequency may have a frequency range, that is, a frequency range in which resonance occurs. A frequency corresponding to a strongest resonance point is a center frequency. A return loss characteristic of the center frequency may be less than -20 dB. It should be understood that, unless otherwise specified, in the "first resonance generated" by the antenna/radiator in this application, the first resonance should be a fundamental resonance generated by the antenna/radiator, or a resonance with a lowest frequency generated by the antenna/radiator.

Resonance band/communication band/operating band: Regardless of a type of antenna, the antenna always operates in a specific frequency range (bandwidth). For example, an operating band of an antenna supporting a B40 band includes a frequency ranging from 2300 MHz to 2400 MHz. In other words, the operating band of the antenna includes the B40 band. The frequency range that satisfies a requirement of an indicator may be considered as the operating band of the antenna.

Electrical length: may be a ratio of a physical length (that is, a mechanical length or a geometric length) to a wavelength of a transmitted electromagnetic wave. The electrical length may satisfy the following formula:

$$\overline{L} = \frac{L}{\lambda}$$

L is the physical length, and $\lambda$ is the wavelength of the electromagnetic wave.

Wavelength: or an operating wavelength, may be a wavelength corresponding to a center frequency of a resonance frequency or a center frequency of an operating band supported by an antenna. For example, it is assumed that a center frequency of a B1 uplink band (with a resonance frequency ranging from 1920 MHz to 1980 MHz) is 1955 MHz, the operating wavelength may be a wavelength calculated by using the frequency of 1955 MHz. The "operating wavelength" is not limited to the center frequency, and may alternatively be a wavelength corresponding to a resonance frequency or a noncenter frequency of an operating band.

It should be understood that a wavelength of a radiation signal in the air may be calculated as follows: (air wavelength or vacuum wavelength) = speed of light/-

frequency, where the frequency is a frequency (MHz) of the radiation signal, and the speed of light may be $3 \times 10^8$ m/s. A wavelength of a radiation signal in a medium may be calculated as follows: medium wavelength

$$= (\text{speed of light}/\sqrt{\varepsilon})/\text{frequency}$$, where $\varepsilon$ is a

relative dielectric constant of the medium. The wavelength in embodiments of this application is usually a medium wavelength, and may be a medium wavelength corresponding to a center frequency of a resonance frequency, or a medium wavelength corresponding to a center frequency of an operating band supported by an antenna. For example, it is assumed that a center frequency of a B1 uplink band (with a resonance frequency ranging from 1920 MHz to 1980 MHz) is 1955 MHz, the wavelength may be a medium wavelength calculated by using the frequency of 1955 MHz. The "medium wavelength" is not limited to the center frequency, and may alternatively be a medium wavelength corresponding to a resonance frequency or a non-center frequency of an operating band. For ease of understanding, the medium wavelength mentioned in embodiments of this application may be simply calculated by using a relative dielectric constant of a medium filled on one or more sides of a radiator.

Total efficiency (total efficiency) of an antenna: is a ratio of input power to output power at an antenna port.

Radiation efficiency (radiation efficiency) of an antenna: is a ratio of power radiated by the antenna to space (that is, power for effectively converting an electromagnetic wave) to active power input to the antenna. Active power input to the antenna = input power of the antenna - loss power. The loss power mainly includes return loss power and metal ohmic loss power and/or dielectric loss power. The radiation efficiency is a value for measuring a radiation capability of an antenna. The metal loss and dielectric loss are both factors that affect the radiation efficiency.

A person skilled in the art may understand that the efficiency is usually represented by a percentage, and there is a corresponding conversion relationship between the efficiency and dB. Efficiency closer to 0 dB indicates better antenna efficiency.

Antenna return loss: may be understood as a ratio of power of a signal reflected back to an antenna port through an antenna circuit to transmit power of the antenna port. A weaker reflected signal indicates a stronger signal radiated by the antenna to space and higher radiation efficiency of the antenna. A stronger reflected signal indicates a weaker signal radiated by the antenna to space and lower radiation efficiency of the antenna.

The antenna return loss may be represented by an S11 parameter, and S11 is one of S parameters. S11 indicates a reflection coefficient, and this parameter can represent transmit efficiency of the antenna. The S11 parameter is usually a negative number. A smaller value of the S11 parameter indicates a smaller return loss of the antenna and less energy reflected back by the antenna. In other words, more energy actually enters the antenna and total efficiency of the antenna is higher. A larger value of the S11 parameter indicates a larger return loss of the antenna and lower total efficiency of the antenna.

It should be noted that, -6 dB is usually used as a standard value of S11 in engineering. When the value of S11 of the antenna is less than -6 dB, it may be considered that the antenna can operate normally, or it may be considered that transmit efficiency of the antenna is good.

It should be understood that, in embodiments of this application, that a first band and a second band are the same (also referred to as intra-frequency) may be understood as any one of the following cases.

The first band and the second band include a same communication band. In an embodiment, the first band and the second band may be applied to a MIMO antenna system. For example, if both the first band and the second band include a sub-6G band in 5G, it may be considered that the first band and the second band are intra-frequency.

The first band and the second band at least partially overlap. For example, the first band includes B35 (1.85 to 1.91 GHz) in LTE, the second band includes B39 (1.88 to 1.92 GHz) in LTE, and frequencies on the first band partially overlap frequencies on the second band. In this case, it may be considered that the first band and the second band are intra-frequency.

It should be understood that, in embodiments of this application, that a first band and a second band are adjacent may be understood as follows:

In the first band and the second band, a spacing between a start frequency of a higher band and an end frequency of a lower band is less than 10% of a center frequency of the higher band (or the spacing is less than or equal to 200 MHz). For example, the first band includes B3 (1.71 to 1.785 GHz) in LTE, the second band includes L1 (1578.42±1.023 MHz) in GPS, and B3 (1.71 to 1.785 GHz) and L1 (1578.42±1.023 MHz) are adjacent bands. In this case, it may be considered that the first band and the second band are adjacent. Alternatively, for example, the first band includes B40 (2.3 to 2.4 GHz) or B41 (2.496 to 2.69 GHz) in LTE, the second band includes a Wi-Fi/BT band (2.4 to 2.485 GHz), and B40 (2.3 to 2.4 GHz) or B41 (2.496 to 2.69 GHz) and the Wi-Fi/BT band (2.4 to 2.485 GHz) are adjacent bands. In this case, it may be considered that the first band and the second band are adjacent.

Ground (ground plane) (ground, GND): may generally mean at least a part of any grounding plane, grounding plate, grounding metal layer, or the like in an electronic device (such as a mobile phone), or at least a part of any combination of the foregoing grounding plane, grounding plate, grounding component, or the like. The "ground" may be used to ground a component in the electronic device. In an embodiment, the "ground" may be a grounding plane of a circuit board of the electronic device, or may be a grounding plane formed by a middle frame of the electronic device or a grounding metal layer formed by a metal film below a screen. In an embodiment, a circuit board may be a printed circuit board (printed circuit board, PCB), for example, an 8-layer board, a 10-layer board, a 12-layer board, a 13-layer board, or a 14-layer board having 8, 10, 12, 13, or 14 layers of conductive materials, or an element that is separated and electrically insulated by a dielectric layer or an insulation layer, for example, glass fiber, polymer, or the like. In an embodiment, a circuit board includes a dielectric substrate, a grounding plane, and a wiring layer, where the wiring layer and the grounding plane are electrically connected through a via hole. In an embodiment, components such as a display, a touchscreen, an input button, a transmitter, a processor, a memory, a battery, a charging circuit, and a system on chip (system on chip, SoC) structure may be mounted on or connected to the circuit board, or electrically connected to a wiring layer and/or a grounding plane in the circuit board. For example, a radio frequency source is disposed at the wiring layer.

Any one of the foregoing grounding plane, grounding plate, or grounding metal layer is made of a conductive material. In an embodiment, the conductive material may be any one of the following materials: copper, aluminum, stainless steel, brass and alloys thereof, copper foil on insulation laminates, aluminum foil on insulation laminates, gold foil on insulation laminates, silver-plated copper, silver-plated copper foil on insulation laminates, silver foil on insulation laminates and tin-plated copper, cloth impregnated with graphite powder, graphite-coated laminates, copper-plated laminates, brass-plated laminates, and aluminum-plated laminates. A person skilled in the art may understand that the grounding plane/grounding plate/grounding metal layer may alternatively be made of another conductive material.

Grounding: refers to coupling with the ground/ground plane in any manner. In an embodiment, grounding may be physical grounding. For example, physical grounding (or referred to as physical ground) at a specific location on a frame is implemented by using some mechanical parts of a middle frame. In an embodiment, grounding may be grounding by using a component, for example, grounding by using a component such as a capacitor/inductor/resistor connected in series or in parallel (or referred to as component ground).

The following describes technical solutions in embodiments of this application with reference to accompanying drawings.

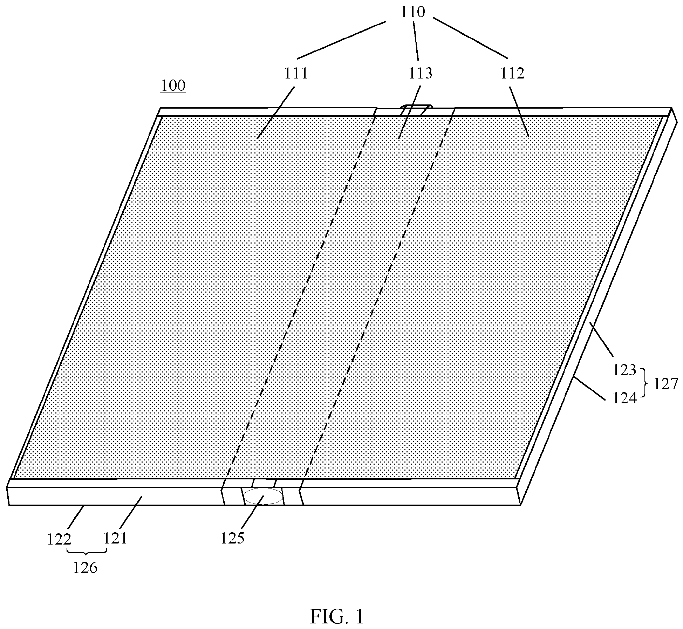

FIG. 1 is a diagram of a structure of a foldable electronic device 100 according to an embodiment of this application. The foldable electronic device 100 may be an electronic device with a folding function, such as a mobile phone, a tablet computer, an electronic reader, a notebook computer, or a wearable device such as a watch. The embodiment shown in FIG. 1 is described by using a foldable mobile phone as an example.

Refer to FIG. 1. The foldable electronic device 100 may include a flexible display 110, a first frame 121, a first cover body 122, a second frame 123, a second cover body 124, and a hinge 125. In some embodiments, the first frame 121, the first cover body 122, the second frame 123, and the second cover body 124 may form a first housing 126 and a second housing 127 that support the flexible display 110. In some other embodiments, at least one of the first cover body 122 and the second cover body 124 may include a display.

A lattice-filled pattern in FIG. 1 may schematically represent the flexible display 110. The flexible display 110 may have features of strong flexibility and bendability, and may provide a user with a new interaction manner based on a bendable feature. For example, a display panel of the flexible display 110 may be any one of a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), or a quantum dot light-emitting diode (quantum dot light-emitting diodes, QLED). This is not limited in this embodiment of this application.

The flexible display 110 may include a first display part 111 corresponding to the first housing 126, a second display part 112 corresponding to the second housing 127, and a foldable display part 113 corresponding to the hinge 125. The foldable display part 113 may be connected between the first display part 111 and the second display part 112.

The first frame 121 may surround a periphery of the first cover body 122, and at least a part of the first frame 121 may further surround a periphery of the first display part 111. The first display part 111 and the first cover body 122 may be disposed in parallel and spaced from each other, and the first display part 111 and the first cover body 122 may be located on two sides of the first frame 121. Space between the first display part 111 and the first cover body 122 may be used to dispose a component of the foldable electronic device 100, such as an antenna or a circuit board component. The second frame 123 may surround a periphery of the second cover body 124, and at least a part of the second frame 123 may further surround a periphery of the second display part 112. The second display part 112 and the second cover body 124 may be disposed in parallel and spaced from each other, and the second display part 112 and the second cover body 124 may be located on two sides of the second frame 123. A component of the foldable electronic device 100, such as an antenna or a circuit board component may be disposed in space between the second display part 112 and the second cover body 124.

In an embodiment provided in this application, a cover body and a frame may be two parts of a housing of the foldable electronic device 100. The cover body and the frame may be connected, and a form of the connection may not belong to an assembly manner such as clamping, adhesion, welding, riveting, or gap fitting. A connection relationship between the cover body and the frame is usually difficult to split. In another embodiment provided in this application, a cover body and a frame may be two different components. A housing of the foldable electronic device 100 may be formed by assembling the cover body and the frame together.

The frame may be at least partially used as an antenna radiator to send/receive a radio frequency signal. There may be a gap between the frame that is used as the radiator and another part of the cover body, to ensure that the antenna radiator has a good radiation environment. In an embodiment, the frame used as the radiator on the cover body may be provided with a slit, to facilitate radiation of the antenna.

A frame 11 may be made of a conductive material such as metal. The frame 11 may be disposed between a display module 15 and a rear cover 21, and extend circumferentially around a periphery of the electronic device 100. The frame 11 may have four sides surrounding the display module 15 to help fasten the display module 15. In an implementation, the frame 11 made of a conductive material may be directly used as a conductive frame of the electronic device 100 to form, for example, an appearance of a metal frame, and this is applicable to a metal industrial design (industrial design, ID). In an implementation, an outer surface of the frame 11 may be made of a conductive material, for example, a metal material, to form an appearance of a metal frame. In these implementations, a conductive part of the frame 11 may be used as an antenna radiator of the electronic device 100.

In another implementation, an outer surface of the frame 11 may alternatively be made of a non-conductive material, for example, plastic, to form an appearance of a non-metal frame, and this is applicable to a non-metal ID. In an implementation, an inner surface of the frame 11 may include a conductive material, for example, a metal material. In this implementation, a conductive part of the frame 11 may be used as an antenna radiator of the electronic device 100. It should be understood that the radiator disposed on the inner surface of the frame 11 (namely, a conductive material on the inner surface) is attached to a non-conductive material of the frame 11, to facilitate antenna radiation. Both the conductive material and the non-conductive material should be considered as a part of the frame 11.

Alternatively, the antenna of the electronic device 100 may be disposed in the housing, for example, a bracket antenna or a millimeter wave antenna (not shown in FIG. 1). Clearance of the antenna disposed in the housing may be obtained by a gap/hole on any one of the cover body, and/or the frame, and/or the display, or by a non-conductive slot/aperture formed between any several of the cover body, and/or the frame, and/or the display. According to the setting of the clearance of the antenna, radiation performance of the antenna can be ensured. It should be understood that, the clearance of the antenna may be a non-conductive area formed by any conductive component in the electronic device 100, and the antenna radiates a signal to external space through the non-conductive area. In an embodiment, a form of the antenna may be an antenna form based on a flexible printed circuit (flexible printed circuit, FPC), an antenna form based on laser direct structuring (laser direct structuring, LDS), a microstrip disk antenna (microstrip disk antenna, MDA), or the like. In an embodiment, the antenna may alternatively be in a transparent structure embedded in the display of the electronic device 100, so that the antenna is a transparent antenna element embedded in the display of the electronic device 100.

The foldable electronic device 100 may further include a printed circuit board PCB (not shown in the figure). The PCB is disposed in a cavity formed by the cover body. The PCB may be a flame-resistant material (FR-4) dielectric board, or may be a Rogers (Rogers) dielectric board, or may be a dielectric board mixing Rogers and FR-4, or the like. FR-4 is a grade code name of a flame-resistant material, and the Rogers dielectric board is a high frequency board. An electronic element, for example, a radio frequency chip, is carried on the PCB 17. In an embodiment, a metal layer may be disposed on the printed circuit board PCB. The metal layer may be used for grounding the electronic element carried on the printed circuit board PCB, or may be used for grounding another component, for example, a bracket antenna or a frame antenna. The metal layer may be referred to as a ground, a grounding plate, or a grounding plane. In an embodiment, the metal layer may be formed by etching metal on a surface of any layer of dielectric board in the PCB. In an embodiment, the metal layer used for grounding may be disposed on a side that is of the printed circuit board PCB and that is close to the flexible display 110. In an embodiment, an edge of the PCB may be considered as an edge of a grounding plane of the PCB. The electronic device 100 may further have another ground/grounding plate/grounding plane, as described above. Details are not described herein again.

The hinge 125 may be connected between the first housing 126 and the second housing 127. Under the effect of the hinge 125, the first housing 126 and the second housing 127 may move close to or away from each other. Correspondingly, the first display part 111 of the flexible display 110 and the second display part 112 of the flexible display 110 may move close to or away from each other, so that the flexible display 110 may be folded or unfolded.

In an example, the hinge 125 may include, for example, a main shaft, a first connection component, and a second connection component. The first connection component may be fastened to the first cover body 122, the second connection component may be fastened to the second cover body 124, and the first connection component and the second connection component may rotate relative to the main shaft. Mutual movement between the first connection component and the second connection component may drive mutual movement between the first housing 126 and the second housing 127, to implement opening and closing functions of the foldable electronic device 100. The foldable electronic device 100 shown in FIG. 1 is currently in an unfolded state. In the unfolded state, an angle between the first housing 126 and the second housing 127 may be approximately 180°. The flexible display 110 may be in the unfolded state shown in FIG. 1.

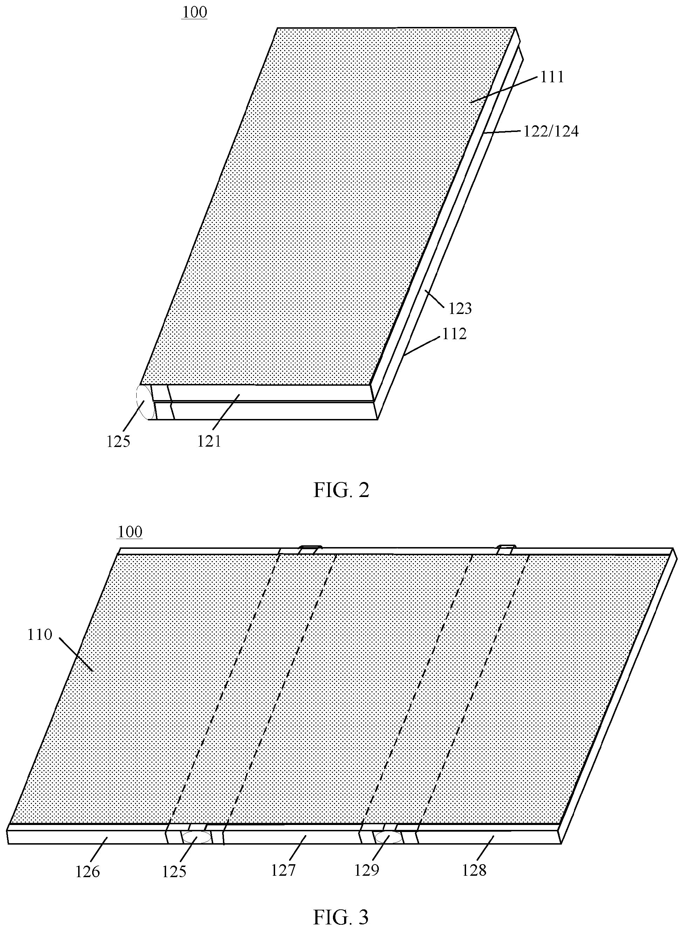

FIG. 2 shows a possible folded state of the foldable electronic device 100. FIG. 2 shows an outward folded state (the outward folded state may be briefly referred to as an outward folded state) of the foldable electronic device 100. The outward folded state shown in FIG. 2 may be, for example, a left-right outward folded state or a top-down outward folded state. With reference to FIG. 1 and FIG. 2, the following describes a possible folded state of the foldable electronic device 100.

In this embodiment of this application, that the foldable electronic device 100 is in a folded state may mean that the foldable electronic device 100 is currently bent, and a bending degree of the foldable electronic device 100 reaches a maximum. In this case, the first cover body 122 and the second cover body 124 may be approximately parallel, spaced from each other, and face-to-face disposed, a spacing distance between the first cover body 122 and the second cover body 124 is minimum, and the first housing 126 and the second housing 127 are at least partially accommodated in space enclosed by the flexible display 110. The first display part 111, the first housing 126, the second housing 127, and the second display part 112 are sequentially stacked. Similarly, the first display part 111 and the second display part 112 may be approximately parallel and spaced from each other, and the spacing distance between the first cover body 122 and the second cover body 124 is less than a spacing distance between the first display part 111 and the second display part 112. In this case, the first display part 111 and the second display part 112 may be considered to be located on different planes.

With reference to FIG. 1 and FIG. 2, when the foldable electronic device 100 is in an outward folded state, the first cover body 122 and the second cover body 124 may be close to each other, and the first display part 111 and the second display part 112 may be close to each other. The first display part 111, the second display part 112, and the foldable display part 113 may form a housing area used to accommodate the first cover body 122, the second cover body 124, and the hinge 125. That is, the first cover body 122, the second cover body 124, and the hinge 125 may be accommodated in space between the first display part 111 and the second display part 112.

It should be understood that the foldable electronic device 100 may be folded inward (an inward folded state may be briefly referred to as an inward folded state). When the foldable electronic device 100 is in an inward folded state, the first cover body 122 and the second cover body 124 may be close to each other, and the first display part 111 and the second display part 112 may be close to each other. The first cover body 122, the second cover body 124, and the hinge 125 may form a housing area used to accommodate the first display part 111, the second display part 112, and the foldable display part 113. That is, the first display part 111, the second display part 112, and the foldable display part 113 may be accommodated in space between the first cover body 122 and the second cover body 124.

The foldable electronic device 100 may be switched between a folded state and an unfolded state. When the foldable electronic device 100 is in a folded state, space occupied by the foldable electronic device 100 is small. When the foldable electronic device 100 is in an unfolded state, the foldable electronic device 100 may display a large screen, to increase a viewing range of a user. The foldable electronic device 100 may further include a third housing 128 and a hinge 129, as shown in FIG. 3. The hinge 129 may be connected between the third housing 128 and the second housing 127. The third housing 128 and the second housing 127 may move close to or away from each other. As a quantity of foldable parts of the foldable electronic device 100 increases, in a case in which a same screen size is maintained in an unfolded state, space occupied by the foldable electronic device 100 may be further reduced in a folded state.

In the foldable electronic device 100 shown in FIG. 3, because there are three foldable parts (the first housing 126, the second housing 127, and the third housing 128), the foldable electronic device 100 has three forms: 1. unfolded state; 2. folded state; and 3. partially unfolded state.

1. FIG. 3 shows a possible unfolded state of the foldable electronic device 100. In the unfolded state, angles between the first housing 126, the second housing 127, and the third housing 128 may be approximately 180°. The flexible display 110 may be in an unfolded state.

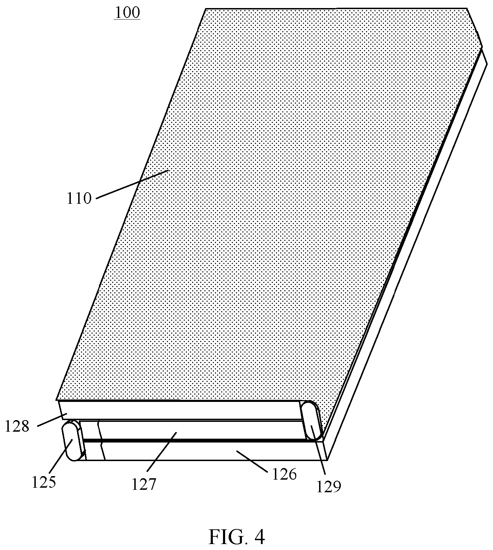

2. FIG. 4 shows a possible folded state (a triple-folded state) of the foldable electronic device 100. In the folded state, the first housing 126 and the second housing 127 rotate along the hinge 125, and the second housing 127 and the third housing 128 rotate along the hinge 129, so that a bending degree of the foldable electronic device 100 reaches a maximum. In this case, the first housing 126, the second housing 127, and the third housing 128 may be considered to be located on different planes.

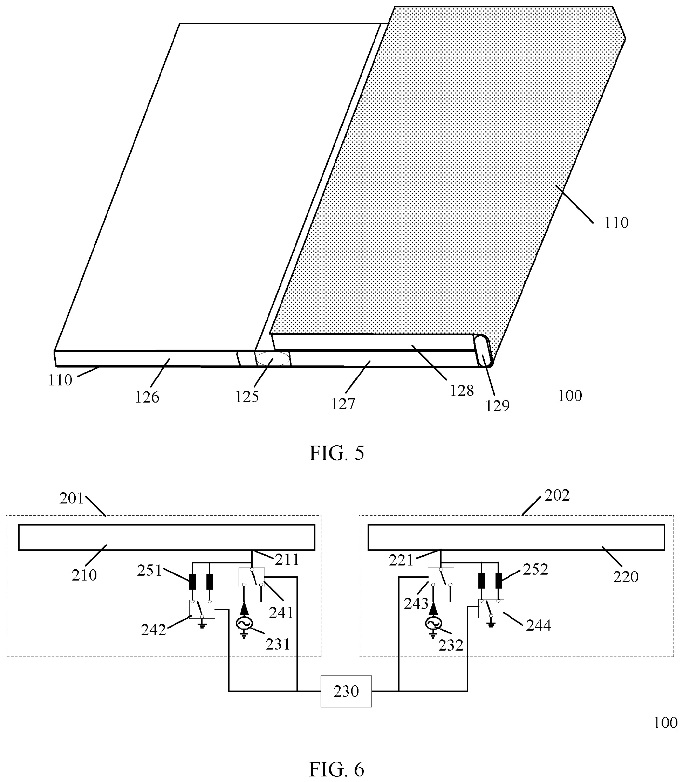

3. FIG. 5 shows a possible partially unfolded state (a double-folded state) of the foldable electronic device 100. In the partially unfolded state, an angle between the first housing 126 and the second housing 127 may be approximately 180°, and the second housing 127 and the third housing 128 rotate along the hinge 129, so that the third housing 128 approaches the second housing 127. In this case, the first housing 126 and the second housing 127 are considered to be located on a same plane, and the second housing 127 and the third housing 128 may be considered to be located on different planes. In another possible partially unfolded state, an angle between the third housing 128 and the second housing 127 may be approximately 180°, and the first housing 126 and the second housing 127 rotate along the hinge 125, so that the first housing 126 approaches the second housing 127.

FIG. 1 shows only an example of some components included in the electronic device 100. An actual shape, an actual size, and an actual construction of these components are not limited to those in FIG. 1.

It should be understood that, in this embodiment of this application, it may be considered that a surface on which the display of the electronic device is located is a front surface, a surface on which the rear cover is located is a rear surface, and a surface on which the frame is located is a side surface.

It should be understood that, in this embodiment of this application, it is considered that when a user holds the electronic device (usually holding the electronic device vertically and facing the screen), an orientation of the electronic device includes top, bottom, left, and right. It should be understood that, in this embodiment of this application, it is considered that when a user holds the electronic device (usually holding the electronic device vertically and facing the screen), an orientation of the electronic device includes top, bottom, left, and right.

Embodiments of this application provide an electronic device and an antenna switching method. The electronic device includes a first antenna, a second antenna, and a controller. When the electronic device is in different communication states, the controller may set some radiators as parasitic branches based on the different communication states, to improve communication performance of the electronic device.

FIG. 6 is a diagram of an electronic device 100 according to an embodiment of this application. As shown in FIG. 6, the electronic device 100 includes a first antenna 201 and a second antenna 202. An operating band of the first antenna 201 is different from an operating band of the second antenna.

The first antenna 201 includes a first radiator 210 and a first feed circuit 231. The second antenna 202 includes a second radiator 220 and a second feed circuit 232.

The first radiator 210 includes a first feedpoint 211. The first feed circuit 231 is coupled to the first feedpoint 211. The first feed circuit 231 includes a first switch 241, and the first switch 241 may be configured to switch a coupling connection status between the first feed circuit 231 and the first feedpoint 211. For example, in a structure shown in FIG. 6, a first port of the first switch 241 is coupled to the first feedpoint 211, and no other electronic element is disposed between the first switch 241 and the first feedpoint 211 (a second port of the first switch 241 is coupled to another electronic element in the first feed circuit 231). The first feed circuit 231 may be connected to or disconnected from the first feedpoint 211 by using the first switch 241.

It should be understood that, in this embodiment of this application, that no other electronic element is disposed between the first switch 241 and the first feedpoint 211 is merely used as an example for description. In actual production or design, the first switch 241 may alternatively be disposed at any location in the first feed circuit 231. This is not limited in this embodiment of this application. A switch disposed in another feed circuit in this embodiment of this application may also be correspondingly understood.

For brevity of description, in embodiments of this application, an electrical connection is used as an example of the coupling connection for description. In actual production or application, the coupling connection may be implemented in an electrical connection or indirect coupling manner. Details are not described again.

The second radiator 220 includes a second feedpoint 221, and the second feed circuit 232 is coupled to the second feedpoint 221.

The electronic device 100 may further include a controller 230. A first port of the controller 230 is electrically connected to a control port of the first switch 241, to control a switch status of the first switch 241.

It should be understood that, according to the technical solution provided in this embodiment of this application, when the electronic device 100 is in different communication states, the controller 230 may control the first switch 241 to be in different switch states, to improve communication performance of the electronic device 100.

That the electronic device 100 is in different communication states may be understood as that the electronic device 100 receives and sends electrical signals by using different antennas, to implement communication. Alternatively, it may be understood that the electronic device 100 performs communication on different communication bands.

In an embodiment, the controller 230 receives a first signal, and the controller 230 determines the switch status of the first switch 241 based on the first signal, where the first signal is used to determine an operating status of the second antenna. For example, when the first signal indicates that the second antenna 202 operates (the electronic device 100 performs communication by using the second antenna 202), the first radiator 210 is used as a parasitic branch of the second antenna 202, and may be configured to improve radiation performance of the second antenna 202, to improve communication quality of the electronic device 100.

It should be understood that, that the controller 230 determines the switch status of the first switch 241 based on the first signal may be understood as that after determining an on or off state of the first switch 241 based on the first signal, the controller 230 indicates another electronic element to switch the switch status of the first switch 241 to the on or off state. For example, after determining the switch status of the first switch 241, the controller 230 may indicate a switcher (for example, an RF IC in a feed circuit) to switch the first switch 241 to the on or off state. Alternatively, in an embodiment, that the controller 230 determines the switch status of the first switch 241 based on the first signal may be understood as that the controller 230 switches the first switch 241 to the on or off state based on the first signal, and does not switch the first switch 241 by using another electronic element. In this embodiment of this application, a switch status determined by the controller 230 may be correspondingly understood.

In an embodiment, when the first radiator 210 is used as a parasitic branch of the second antenna 202, the controller 230 switches the first switch 241 from a first switch state to a second switch state, and the first feed circuit 231 is not electrically connected to (is disconnected from) the first feedpoint 211.

In an embodiment, the first switch 241 is a single pole single throw (single pole single throw, SPST) switch. It should be understood that, in this embodiment of this application, the switch may be selected based on actual production or design, or may be a single pole double throw (single pole double throw, SPDT) switch or a single pole x throw (single pole x throw, SPXT) switch. This is not limited in this embodiment of this application, provided that a quantity of second ports of the switch is greater than a quantity of electronic elements or radio frequency channels that need to be connected.

In an embodiment, the first antenna 201 may further include a second switch 242. A first port of the second switch 242 is coupled to a ground, and a second port of the second switch 242 is coupled to the first feedpoint 211. A second port of the controller 230 is electrically connected to a control port of the second switch 242, to control a switch status of the second switch 242. In an embodiment, at least one electronic element 251 is electrically connected between the second port of the second switch 242 and the first feedpoint 211. In an embodiment, at least one electronic element 251 is electrically connected between the first port of the second switch 242 and the ground. In an embodiment, the second switch 242 is configured to switch a coupling connection status between the at least one electronic element 251 and the first feedpoint 211 or the ground. For brief description, in this embodiment of this application, only an example in which at least one electronic element 251 is electrically connected between the second port of the second switch 242 and the first feedpoint 211 is used for description.

In an embodiment, the controller 230 determines the switch status of the second switch 242 based on the first signal.

It should be understood that the second switch 242 may be configured to match a radiation characteristic of a resonance generated by the first radiator 210 (for example, a frequency of a resonance point). For example, when the first radiator 210 is configured to generate a first resonance, the controller 230 indicates to electrically connect the first port of the second switch 242 to a 1st second port, so that an electronic element 251 that is electrically connected between the 1st second port and the ground is coupled to the first feedpoint 211. When the first radiator 210 is used as a parasitic branch of the second antenna 202 and generates a first parasitic resonance, the controller 230 indicates to electrically connect the first port of the second switch 242 to a 2nd second port, so that an electronic element 251 that is electrically connected between the 2nd second port and the ground is coupled to the first feedpoint 211.

In addition, switch statuses of all switches in this embodiment of this application are determined by the controller 230. The controller 230 may switch a switch status of a switch by sending an electrical signal to a control port of the switch.

In an embodiment, both the first port of the first switch 241 and the second port of the second switch 242 may be coupled to the first feedpoint 211 by using a same feed connector (for example, a metal spring).

In an embodiment, for brevity of description, in the foregoing embodiments, an example in which the first switch 241 and the second switch 242 are coupled to the first radiator 210 at the first feedpoint 211 is used for description. In an embodiment, the first radiator 210 includes a first connection point, the second port of the second switch 242 is coupled to the first connection point, and the first connection point is different from the first feedpoint 211.

It should be understood that, when the first switch 241 is an x pole x throw (x pole x throw, XPXT) switch, the first switch 241 may include at least two first ports, and may implement functions of the first switch 241 and the second switch 242 at the same time. One of the at least two first ports may be configured to switch a coupling connection status with the first feed circuit 231, and one of the at least two first ports may be configured to switch an electronic element that is electrically connected to the ground, to match different resonances generated by the first radiator 210.

In an embodiment, the controller 230 may be a microcontroller unit (microcontroller unit, MCU). In an embodiment, the second feed circuit 232 may include a third switch 243, and the third switch 243 may be configured to switch a coupling connection status between the second feed circuit 232 and the second feedpoint 221. For example, in the structure shown in FIG. 6, a first port of the third switch 243 is coupled to the second feedpoint 221, and a second port of the third switch 243 is coupled to another electronic element in the second feed circuit 232. A third port of the controller 230 is electrically connected to a control port of the third switch 243, to control a switch status of the third switch 243.

It should be understood that the controller 230 receives a second signal, and the controller 230 determines the switch status of the third switch 243 based on the second signal, where the second signal is used to determine an operating status of the first antenna. For example, when the first signal indicates that the first antenna 201 operates (the electronic device 100 performs communication by using the first antenna 201), the second radiator 220 is used as a parasitic branch of the first antenna 201, and may be configured to improve radiation performance of the first antenna 201, to improve communication quality of the electronic device 100.

In an embodiment, the controller 230 receives the first signal and the second signal, and determines switch statuses of switches based on the first signal and the second signal (operating statuses of the first antenna 201 and the second antenna), to improve communication quality of the electronic device 100.

In an embodiment, the second antenna 202 may further include a fourth switch 244. A first port of the fourth switch 244 is coupled to the ground. A second port of the fourth switch 244 is coupled to the second feedpoint 221. A fourth port of the controller 230 is electrically connected to a control port of the fourth switch 244, to control a switch status of the fourth switch 244. In an embodiment, at least one electronic element 252 is electrically connected between the second port of the fourth switch 244 and the second feedpoint 221. In an embodiment, at least one electronic element 252 is electrically connected between the first port of the fourth switch 244 and the ground. In an embodiment, the fourth switch 244 is configured to switch a coupling connection status between the at least one electronic element 252 and the second feedpoint 221 or the ground.

It should be understood that the fourth switch 244 may be configured to match a radiation characteristic of a resonance generated by the second radiator 220 (for example, a frequency of a resonance point). For example, when the second radiator 220 is configured to generate a second resonance, the controller 230 indicates to electrically connect the first port of the fourth switch 244 to a 1st second port, so that an electronic element 252 that is electrically connected between the 1st second port and the ground is coupled to the second feedpoint 221. When the second radiator 220 is used as a parasitic branch of the first antenna 201 and generates a second parasitic resonance, the controller 230 indicates to electrically connect the first port of the fourth switch 244 to a 2nd second port, so that an electronic element 252 that is electrically connected between the 2nd second port and the ground is coupled to the second feedpoint 221.

In an embodiment, the operating band of the first antenna 201 may include at least a partial band in a cellular network, for example, B1 (1920 MHz to 1980 MHz), B3 (1710 MHz to 1785 MHz), and B7 (2500 MHz to 2570 MHz) in LTE. In an embodiment, the operating band of the first antenna 201 may alternatively include a satellite communication band. In an embodiment, the operating band of the first antenna 201 may alternatively include at least a partial band in a non-cellular network, for example, a Wi-Fi band, a BT band, or a GPS band, or may include a satellite communication band.

In an embodiment, the operating band of the second antenna 202 may include at least a partial band in a cellular network. In an embodiment, the operating band of the second antenna 202 may alternatively include a satellite communication band. In an embodiment, the operating band of the second antenna 202 may alternatively include at least a partial band in near field communication, for example, a Wi-Fi band, a BT band, or a GPS band, or may include a satellite communication band.

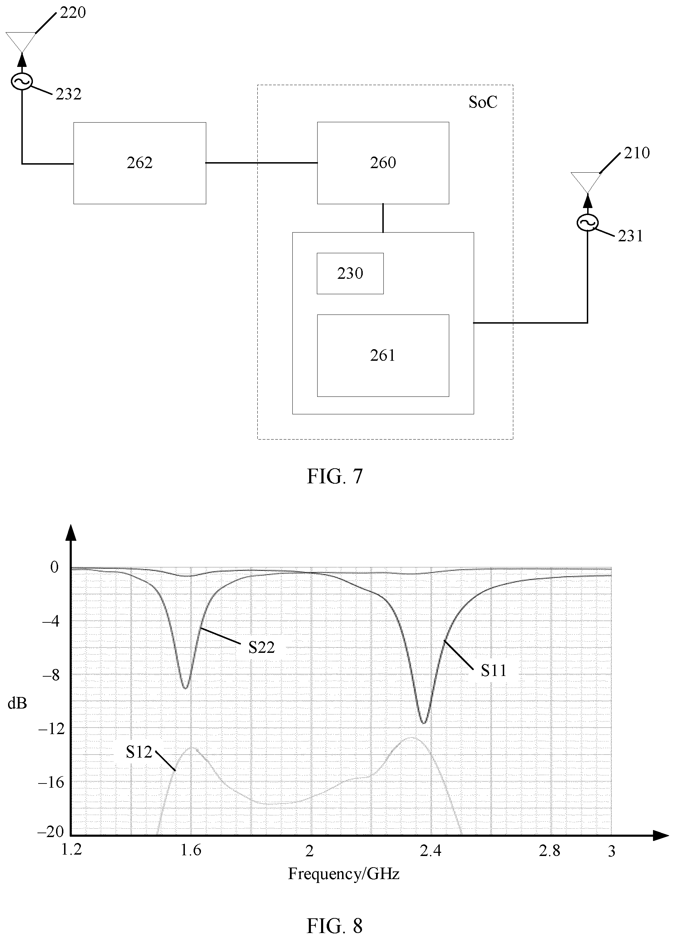

In an embodiment, the first antenna further includes a first modem (modem) 261, as shown in FIG. 7. The first modem 261 is electrically connected to the first feed circuit 231. The first modem 261 may be configured to process an electrical signal sent or received by the first antenna 201.

In an embodiment, the second antenna further includes a second modem 262. The second modem 262 is electrically connected to the second feed circuit 232. The second modem 262 may be configured to process an electrical signal sent or received by the second antenna 202.

It should be understood that, that the modem is configured to process an electrical signal sent or received by the antenna may be understood as modulation, for example, up-conversion, on an electrical signal transmitted by a feed circuit, or modulation, for example, down-conversion, on an electrical signal received by the antenna.

In an embodiment, the electronic device includes a first chip, and the first chip includes the controller 230 and the first modem 261. The controller 230 and the first modem 261 are integrated in a same chip.

It should be understood that, if the controller 230 and the first modem 261 are disposed independently, and the controller 230 is connected to the first modem 261 through an interface, switching performed by the controller 230 on a switch status of a switch causes a time sequence disorder of transmitted electrical signals, and a complex processing process is required. When the controller 230 and the first modem 261 are integrated in a same chip (the first chip includes the controller 230 and the first modem 261), the controller 230 and the first modem 261 are bound to each other by using a circuit, and switching performed by the controller 230 on a switch status of a switch does not cause a time sequence disorder of transmitted electrical signals.

In an embodiment, the electronic device 100 may further include an application processor (application processor, AP). A first port of the AP 260 is electrically connected to the controller 230, and a second port is electrically connected to the second modem 262.

It should be understood that the AP 260 may be configured to transmit the first signal to the controller 230, and the first signal may be used to determine the operating status of the second antenna. For example, the operating status of the second antenna may be understood as whether the electronic device performs communication by using the second antenna.

In an embodiment, the electronic device 100 may further include a system on chip (system on chip, SoC). The SoC may include the AP 260, the controller 230, and the first modem 261. The AP 260, the controller 230, and the first modem 261 are integrated into the SoC.

In an embodiment, the AP 260 may further receive a third signal sent by the second modem 262. The third signal may be used to determine the operating status of the second antenna. In an embodiment, the third signal may include the operating band and service information of the second antenna.

In an embodiment, the first modem 261 sends the second signal to the controller 230, and the second signal may be used to determine the operating status of the first antenna. In an embodiment, the third signal may include the operating band and service information of the first antenna.

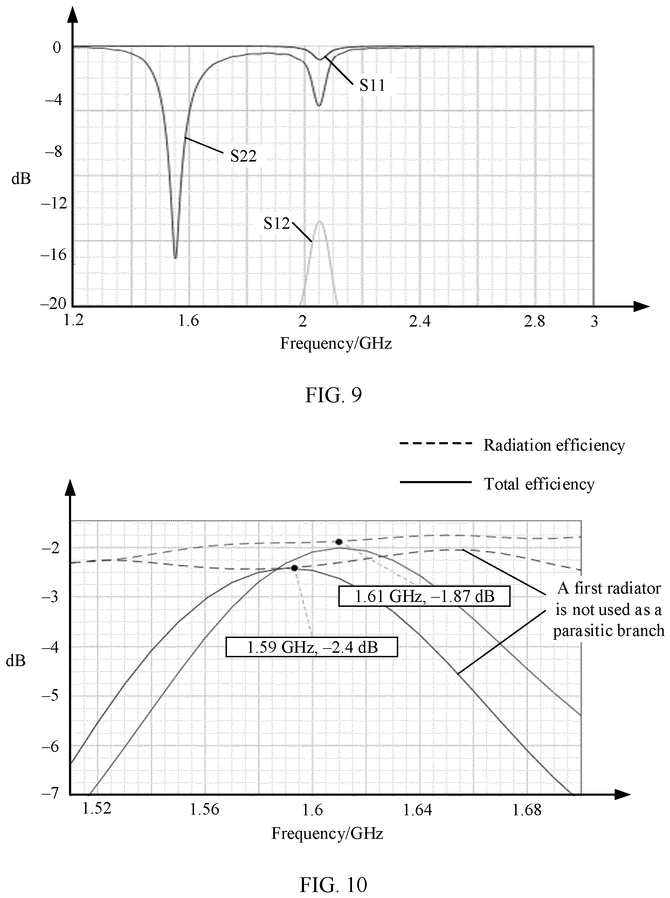

FIG. 8 to FIG. 10 show simulation results of an antenna in the electronic device shown in FIG. 6. FIG. 8 shows a simulation result of S parameters of a first antenna and a second antenna in the electronic device shown in FIG. 6. FIG. 9 shows a simulation result of an S parameter of a second antenna when a first radiator in the electronic device shown in FIG. 6 is used as a parasitic branch. FIG. 10 shows total efficiency and radiation efficiency of a second antenna in the electronic device shown in FIG. 6.

It should be understood that, for brevity of description, in the electronic device shown in FIG. 6, only an example in which the operating band of the first antenna includes a Wi-Fi band and the operating band of the second antenna includes GPS is used for description.

As shown in FIG. 8, when the electronic device performs communication by using both the first antenna (S11) and the second antenna (S22) (both the first antenna and the second antenna operate), the first antenna generates a resonance (a first resonance) near 2.4 GHz, a resonance band may include a Wi-Fi band, the second antenna generates a resonance (a second resonance) near 1.6 GHz, and a resonance band may include a GPS band. In addition, isolation (S12) between the first antenna and the second antenna is less than -12 dB.

When the electronic device performs communication by using only the second antenna (the first antenna does not operate, and the second antenna operates), the controller makes the first port of the first switch not electrically connected to the first feed circuit, and the first port of the second switch is electrically connected to a corresponding electronic element that is of the first radiator and that is used as a parasitic branch of the second antenna, so that the first radiator is used as a parasitic branch of the second antenna.

As shown in FIG. 9, the second antenna may generate resonances near 1.6 GHz and near 2 GHz. The resonance generated near 1.6 GHz is the second resonance generated by the second radiator. The resonance generated near 2 GHz is a first parasitic resonance generated by the first radiator, and may be used to improve a radiation characteristic of the second antenna, for example, radiation efficiency and total efficiency.

As shown in FIG. 10, in a GPS band, compared with a case that the first radiator is not used as a parasitic branch, total efficiency of the second antenna is improved by about 0.5 dB, and radiation efficiency is improved by about 0.5 dB.

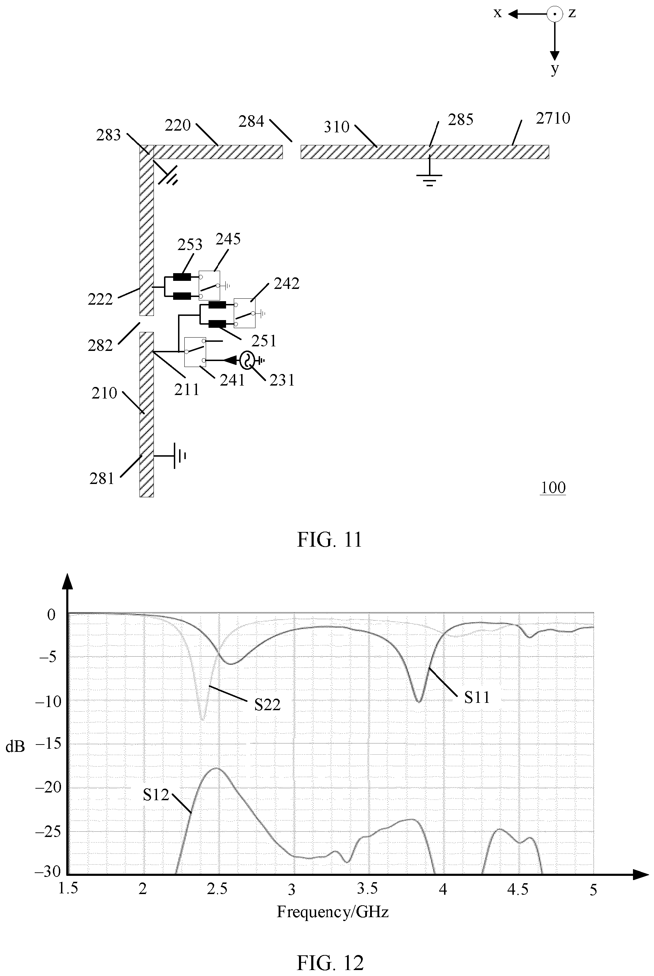

FIG. 11 is a diagram of an electronic device 100 according to an embodiment of this application. As shown in FIG. 11, the electronic device includes a first frame 2710.

The first frame 2710 includes a first location 281, a second location 282, a third location 283, and a fourth location 284 that are successively provided along an extension direction of the first frame 2710. In an embodiment, the second location 282 is located between the first location 281 and the third location 283, and the third location 283 is located between the second location 282 and the fourth location 284. The first frame 2710 is coupled to a ground at the first location 281 and the third location 283, and the first frame 2710 is provided with a first slot at the second location 282, and is provided with a second slot at the fourth location 284.

The first radiator 210 is a conductive part between the first location 281 and the second location 282. The second radiator 220 is a conductive part between the third location 283 and the fourth location 284.

In an embodiment, the first frame 2710 further includes a first connection point 222. The first connection point 222 is located between the second location 282 and the third location 283. The electronic device 100 further includes a fifth switch 245. A first port of the fifth switch 245 is coupled to the ground, and a second port of the fifth switch 245 is coupled to the first connection point 222. A fifth port of the controller 230 is electrically connected to a control port of the fifth switch 245, to control a switch status of the fifth switch 245. In an embodiment, at least one electronic element 253 is electrically connected between the second port of the fifth switch 245 and the first connection point 222. In an embodiment, at least one electronic element 253 is electrically connected between the first port of the fifth switch 245 and the ground.

It should be understood that the fifth switch 245 may be configured to switch a radiation aperture of the second antenna. When both the first antenna and the second antenna operate, the first port of the fifth switch 245 is directly electrically connected to the first connection point 222, or is electrically connected to the first connection point 222 by using a 0-ohm resistor, and the second antenna generates radiation through a second frame 2720 between the third location 283 and the fourth location 284. When the first antenna does not operate and the second antenna operates, the first port of the fifth switch 245 is electrically connected to a corresponding second port, the first connection point 222 is electrically connected to the ground by using a corresponding electronic element 253, and the second antenna generates radiation through a second frame 2720 between the second location 282 and the fourth location 284. In addition, the first switch 241 enables the first feed circuit 231 to be disconnected from (not electrically connected to) the first feedpoint 211, and the first port of the second switch 242 to be electrically connected to a corresponding electronic element 251 that is of the first radiator 210 and that is used as a parasitic branch of the second antenna, so that the first radiator 210 is used as a parasitic branch of the second antenna, thereby improving a radiation characteristic of the second antenna.

In an embodiment, the electronic device 100 may further include a third antenna. The third antenna includes a third radiator 310. The second frame 2720 includes a fifth location 285, and the fourth location 284 is located between the third location 283 and the fifth location 285. The third radiator 310 is a conductive part between the fifth location 285 and the fourth location 284.

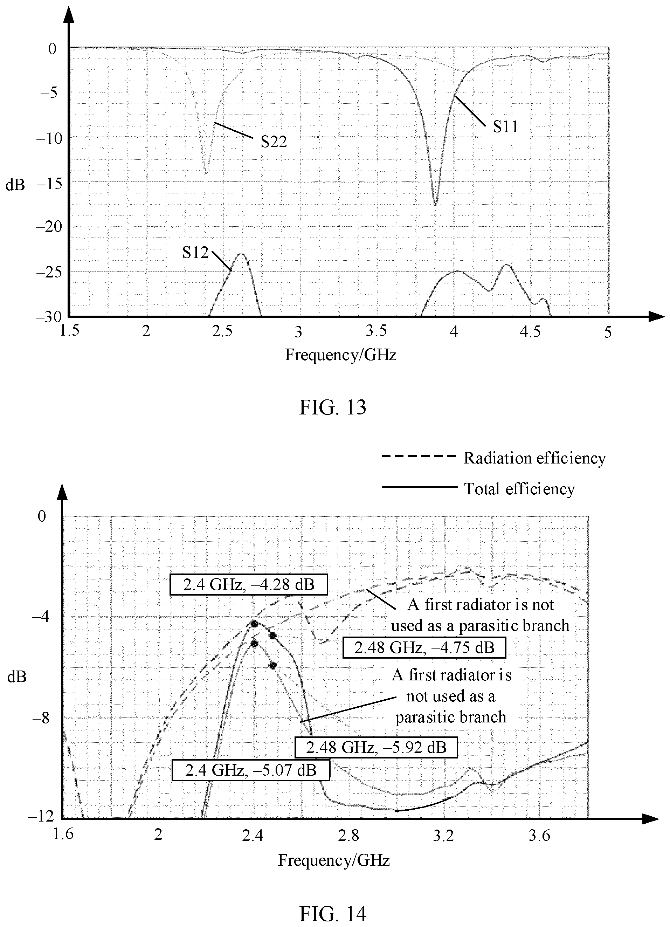

FIG. 12 to FIG. 14 show simulation results of an antenna in the electronic device shown in FIG. 11. FIG. 12 shows a simulation result of S parameters of a first antenna and a second antenna in the electronic device shown in FIG. 11. FIG. 13 shows a simulation result of an S parameter of a second antenna when a first radiator in the electronic device shown in FIG. 11 is used as a parasitic branch. FIG. 14 shows total efficiency and radiation efficiency of a second antenna in the electronic device shown in FIG. 11.

It should be understood that, for brevity of description, in the electronic device shown in FIG. 6, only an example in which the first antenna is used as a subunit in a MIMO system, the operating band of the first antenna includes at least a partial band in sub-6G, and the operating band of the second antenna includes a Wi-Fi band is used for description.

As shown in FIG. 12, when the electronic device performs communication by using both the first antenna (S11) and the second antenna (S22) (both the first antenna and the second antenna operate), the first antenna generates resonances near 2.6 GHz and 3.9 GHz, a resonance band may include at least a partial band in sub-6G, the second antenna generates a resonance near 2.4 GHz, and a resonance band may include a Wi-Fi band. In addition, isolation (S12) between the first antenna and the second antenna is less than -18 dB.

When the electronic device performs communication by using only the second antenna (the first antenna does not operate, and the second antenna operates), the second antenna may generate resonances near 2.4 GHz and near 2.6 GHz, as shown in FIG. 13.

As shown in FIG. 14, in a Wi-Fi band, compared with a case that the first radiator is not used as a parasitic branch, total efficiency of the second antenna is improved by about 0.8 dB, and radiation efficiency is improved by about 1 dB.

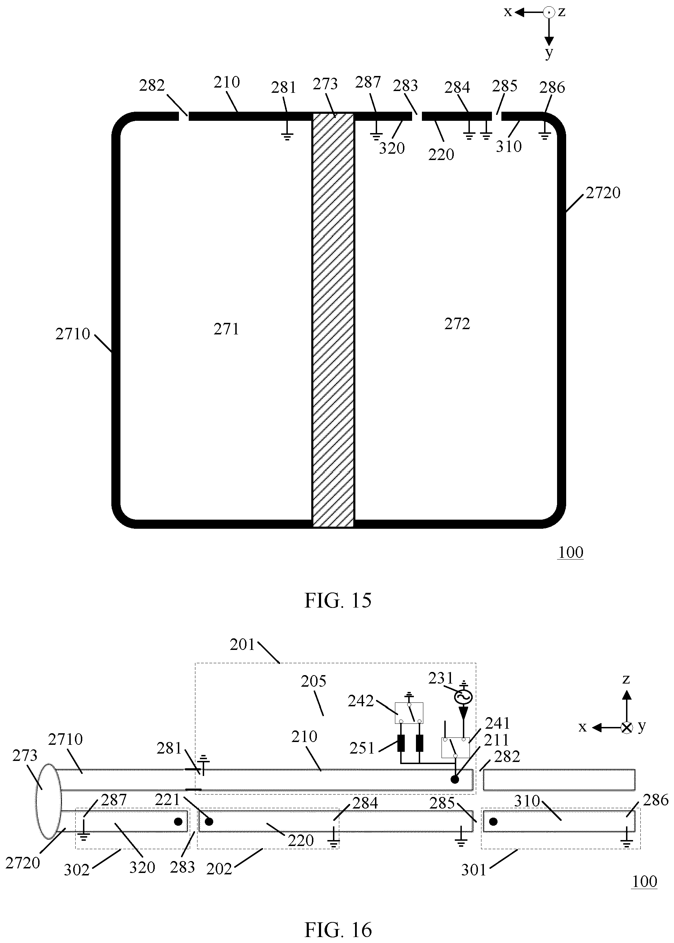

FIG. 15 is a diagram of an electronic device 100 according to an embodiment of this application. As shown in FIG. 15, the electronic device 100 may include a first housing 271, a second housing 272, and a first hinge 273.

The first hinge 273 is located between the first housing 271 and the second housing 272, and the first hinge 273 is rotatably connected to the first housing 271 and the second housing 272, so that the first housing 271 and the second housing 272 can rotate relative to each other.

The first housing 271 includes a first frame 2710, and the second housing 272 includes a second frame 2720.

The first frame 2710 includes a first location 281 and a second location 282. The second frame 2720 includes a third location 283 and a fourth location 284. The first radiator 210 is a conductive part between the first location 281 and the second location 282. The second radiator 220 is a conductive part between the third location 283 and the fourth location 284.

As shown in FIG. 16, when the electronic device 100 is in a folded state, the first radiator 210 and the second radiator 220 at least partially overlap in a first direction, and the first direction is a thickness direction of the electronic device 100, for example, a z direction.

In an embodiment, the first frame 2710 is coupled to the ground at the first location 281, and the first frame 2710 is provided with a first slot at the second location 282. In an embodiment, the second frame 2720 is provided with a second slot at the third location 283, and the second frame 2720 is coupled to the ground at the fourth location 284.

It should be understood that, for brevity of description, in this embodiment of this application, only an example in which one end of the radiator in each of the first antenna 201 and the second antenna 202 is an open end, another end is a ground coupling end, and the radiator operates in a quarter wavelength mode is used for description. In actual application, the first antenna 201 and the second antenna 202 may alternatively operate in another mode.

In an embodiment, a length L1 of the first radiator (the first frame 2710 between the first location 281 and the second location 282) and a length L2 of the second radiator (the second frame 2720 between the third location 283 and the fourth location 284) satisfy: $1.5 \times L2 \leq L1 \leq 2 \times L2$.

In an embodiment, when the electronic device 100 performs communication by using the second antenna 202, the controller may control the first switch 241 to disconnect (not electrically connect) the first feed circuit 231 from the first feedpoint 211, and control the first port of the second switch 242 to be electrically connected to a corresponding electronic element 251 that is of the first radiator 210 and that is used as a parasitic branch of the second antenna 202, so that the first radiator 210 is used as a parasitic branch of the second antenna 202, thereby improving communication performance of the electronic device 100.

It should be understood that, for brevity of description, in this embodiment of this application, only an example in which the first antenna 201 does not operate and the second antenna operates is used for description. In actual production or design, when the first antenna 201 operates and the second antenna 202 does not operate, the second radiator 220 of the second antenna 202 may be used as a parasitic branch of the first antenna 201, to improve a radiation characteristic of the first antenna 201. This is not limited in this embodiment of this application.

In an embodiment, the electronic device 100 may further include a third antenna 301. The third antenna 301 includes a third radiator 310. The second frame 2720 includes a fifth location 285 and a sixth location 286, and the third location 283, the fourth location 284, the fifth location 285, and the sixth location 286 are successively provided along an extension direction of the second frame. The fifth location 285 is located between the fourth location 284 and the sixth location 286, and the fourth location 284 is located between the third location 283 and the fifth location 285. The third radiator 310 is a conductive part between the fifth location 285 and the sixth location 286. In an embodiment, the second frame 2720 is provided with a third slot at the fifth location 285, and the second frame 2720 is coupled to the ground at the sixth location 286.

In an embodiment, a length L1 of the first radiator (the first frame 2710 between the first location 281 and the second location 282) and a length L3 of the third radiator (the second frame 2720 between the fifth location 285 and the sixth location 286) satisfy: $1.8{\times}L3{\le}L1{\le}3{\times}L3$.

In an embodiment, the electronic device 100 may further include a fourth antenna 302. The fourth antenna 302 includes a fourth radiator 320. The second frame 2720 includes a seventh location 287, and the third location 283 is located between the fourth location 284 and the seventh location 287. The third radiator 310 is a conductive part between the seventh location 287 and the third location 283.

In an embodiment, the second frame 2720 is coupled to the ground at the seventh location 287.

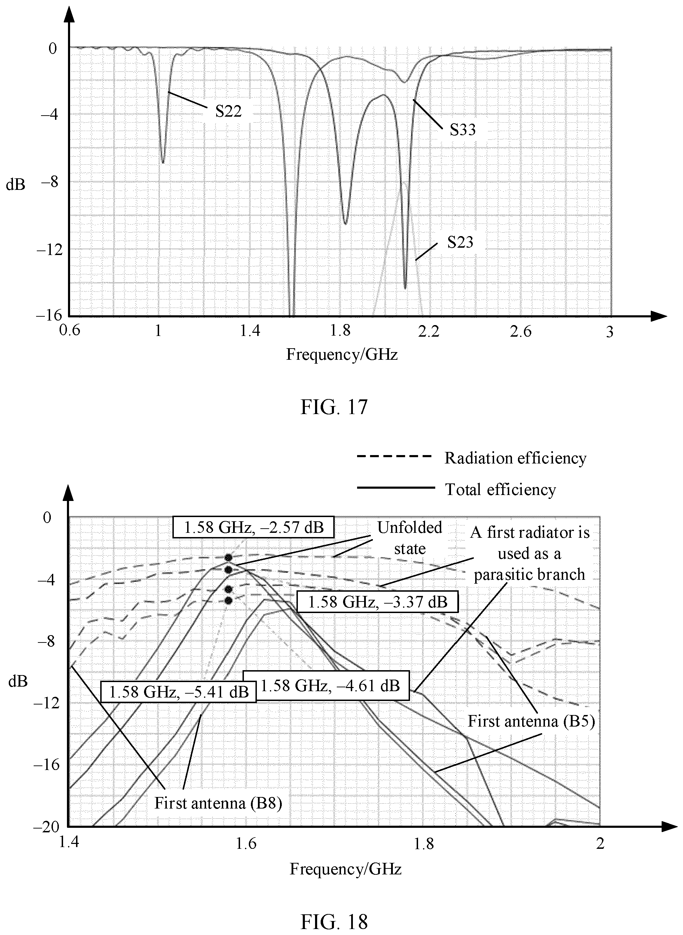

FIG. 17 and FIG. 18 show simulation results of an antenna in the electronic device shown in FIG. 16. FIG. 17 shows a simulation result of S parameters of a second antenna and a third antenna when a first radiator in the electronic device shown in FIG. 11 is used as a parasitic branch. FIG. 18 shows total efficiency and radiation efficiency of a second antenna in the electronic device shown in FIG. 11.

It should be understood that, for brevity of description, in the electronic device shown in FIG. 11, only an example in which the operating band of the first antenna includes at least a partial band in a low band (low band, LB) (698 MHz to 960 MHz), the operating band of the second antenna includes an L1 band in GPS, an operating band of the third antenna may include at least a partial band in a middle band (middle band, MB) (1710 MHz to 2170 MHz), and an operating band of the fourth antenna includes a Wi-Fi band is used for description.

As shown in FIG. 17, when the electronic device performs communication by using only the second antenna and the third antenna (the first antenna does not operate, and the second antenna and the third antenna operate), the first radiator is used as a parasitic branch of the second antenna to improve a radiation characteristic of the second antenna. The second antenna (S22) generates resonances near 1 GHz and near 1.6 GHz, and a resonance band may include an L1 band in GPS. The third antenna (S33) generates resonances near 1.8 GHz and near 1.1 GHz, and a resonance band may include a B3 band in MB. When the first radiator is used as a parasitic branch, isolation (S23) between the second antenna and the third antenna is less than -8 dB.

As shown in FIG. 18, in an L1 band in GPS, when the electronic device is in an unfolded state, radiation efficiency of the second antenna is -2.57 dB; when the electronic device is in a folded state and the first antenna operates on a B5 band in LB, radiation efficiency of the second antenna is -4.61 dB; when the electronic device is in a folded state and the first antenna operates on a B5 band in LB, radiation efficiency of the second antenna is -5.41 dB; or when the electronic device is in a folded state and the first radiator in the first antenna is used as a parasitic branch, radiation efficiency of the second antenna is -3.37 dB. When the electronic device is in a folded state, radiation efficiency of the second antenna is significantly improved compared with a case that the first radiator is not used as a parasitic branch.

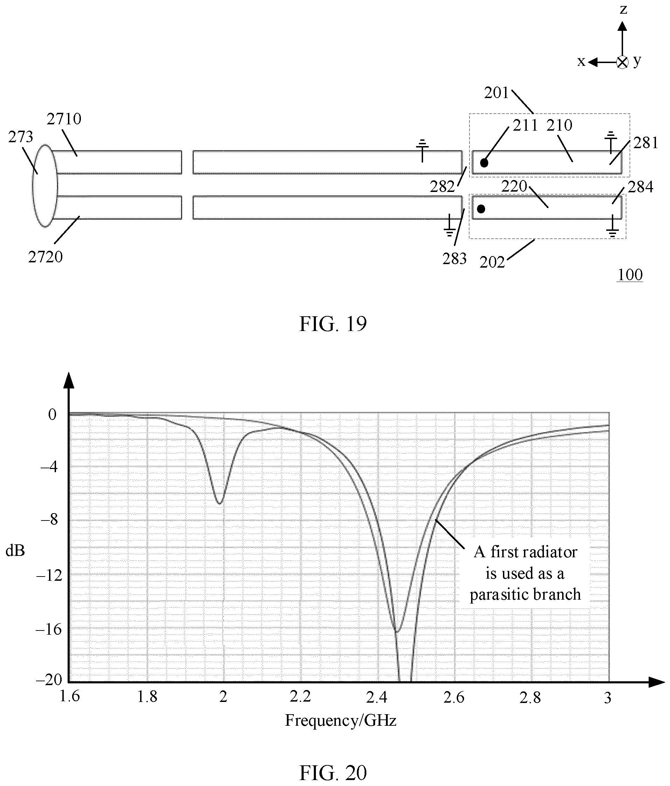

FIG. 19 is a diagram of a foldable electronic device 100 according to an embodiment of this application.

It should be understood that a difference between the electronic device 100 shown in FIG. 19 and the electronic device 100 shown in FIG. 16 lies only in that the first radiator 210 and the second radiator 220 have different lengths. In the electronic device 100 shown in FIG. 16, a length L1 of the first radiator (the first frame 2710 between the first location 281 and the second location 282) and a length L2 of the second radiator (the second frame 2720 between the third location 283 and the fourth location 284) satisfy: $1.5{\times}L2{\le}L1{\le}2{\times}L2$. In the electronic device 100 shown in FIG. 19, a length L1 of the first radiator (the first frame 2710 between the first location 281 and the second location 282) and a length L2 of the second radiator (the second frame 2720 between the third location 283 and the fourth location 284) are approximately the same, and satisfy: $0.9{\times}L2{\le}L1{\le}1.1{\times}L2$.

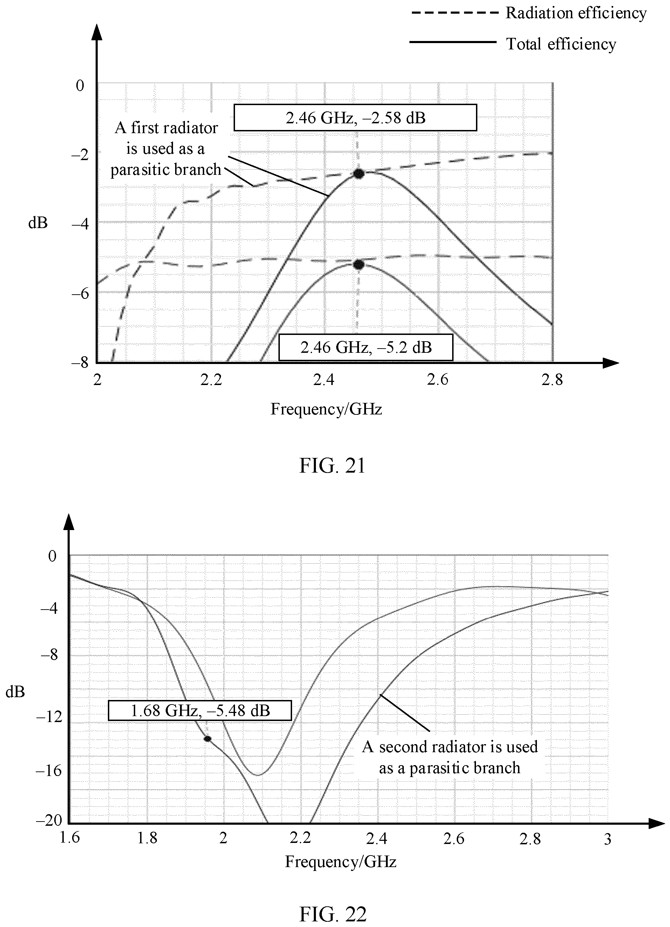

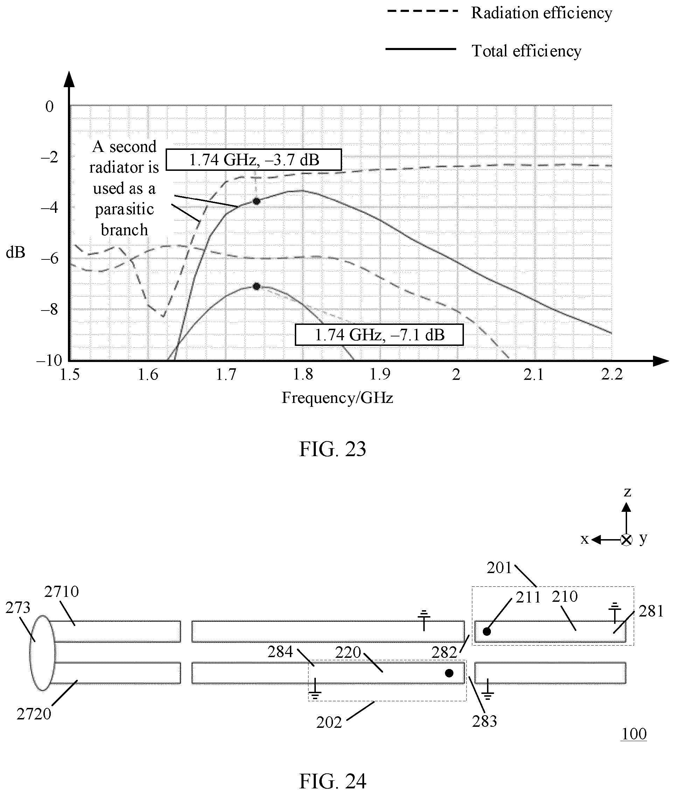

FIG. 20 to FIG. 23 show simulation results of an antenna in the electronic device shown in FIG. 19. FIG. 20 shows a simulation result of an S parameter of a second antenna when a first radiator in the electronic device shown in FIG. 19 is used as a parasitic branch. FIG. 21 shows total efficiency and radiation efficiency of a second antenna when a first radiator in the electronic device shown in FIG. 19 is used as a parasitic branch. FIG. 22 shows a simulation result of an S parameter of a first antenna when a second radiator in the electronic device shown in FIG. 19 is used as a parasitic branch. FIG. 23 shows total efficiency and radiation efficiency of a first antenna when a second radiator in the electronic device shown in FIG. 19 is used as a parasitic branch.

It should be understood that, for brevity of description, in the electronic device shown in FIG. 19, only an example in which the operating band of the first antenna includes at least a partial band in MB, and the operating band of the second antenna includes a Wi-Fi band is used for description. As shown in FIG. 20, when the electronic device performs communication by using only the second antenna (the first antenna does not operate, and the second antenna operates), the first radiator is used as a parasitic branch of the second antenna, and generates a parasitic resonance near 2 GHz.

As shown in FIG. 21, in a Wi-Fi band, when the first radiator is used as a parasitic branch, radiation efficiency and total efficiency of the second antenna are improved by about 2.7 dB.

As shown in FIG. 22, when the electronic device performs communication by using only the first antenna (the second antenna does not operate, and the first antenna operates), the second radiator is used as a parasitic branch of the first antenna, and generates a parasitic resonance near 1.68 GHz. As shown in FIG. 23, in an MB band, when the second radiator is used as a parasitic branch, radiation efficiency and total efficiency of the first antenna are improved by about 3 dB.

FIG. 24 is a diagram of a foldable electronic device 100 according to an embodiment of this application.

It should be understood that a difference between the electronic device 100 shown in FIG. 24 and the electronic device 100 shown in FIG. 16 lies only in that the first radiator 210 and the second radiator 220 have a different relative location. In the electronic device 100 shown in FIG. 16, the first radiator 210 and the second radiator 220 at least partially overlap in the first direction. In the electronic device 100 shown in FIG. 24, the first radiator 210 and the second radiator 220 do not overlap in the first direction, and the first slot at the second location 282 and the second slot at the third location 283 at least partially overlap in the first direction. When a radiator is used as a parasitic branch, a parasitic resonance may be generated based on electric field coupling energy at the slot.

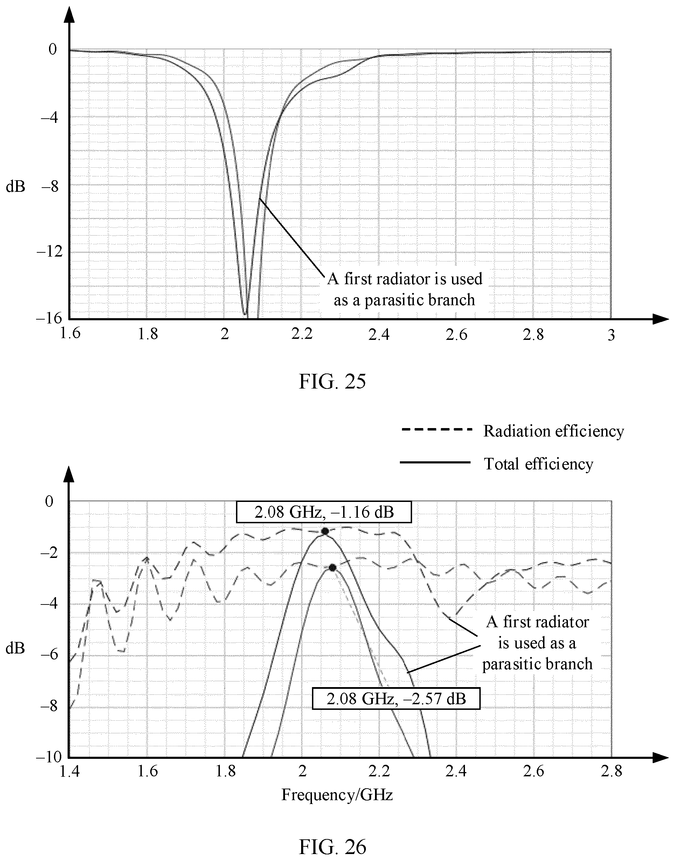

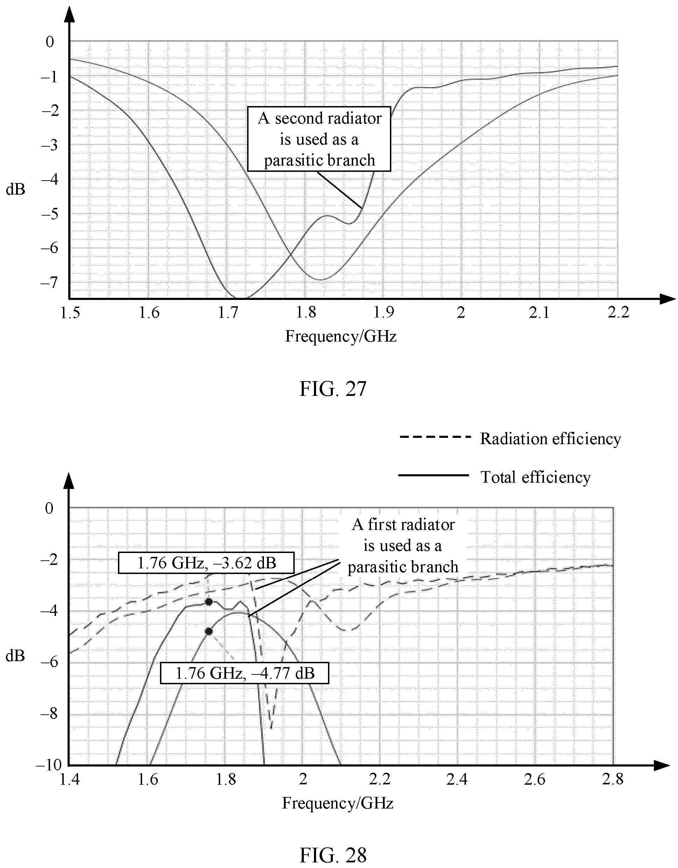

FIG. 25 to FIG. 28 show simulation results of an antenna in the electronic device shown in FIG. 24. FIG. 25 shows a simulation result of an S parameter of a second antenna when a first radiator in the electronic device shown in FIG. 24 is used as a parasitic branch. FIG. 26 shows total efficiency and radiation efficiency of a second antenna when a first radiator in the electronic device shown in FIG. 24 is used as a parasitic branch. FIG. 27 shows a simulation result of an S parameter of a first antenna when a second radiator in the electronic device shown in FIG. 24 is used as a parasitic branch. FIG. 28 shows total efficiency and radiation efficiency of a first antenna when a second radiator in the electronic device shown in FIG. 24 is used as a parasitic branch.

It should be understood that, for brevity of description, in the electronic device shown in FIG. 28, only an example in which the operating band of the first antenna includes at least a partial band in MB, and the operating band of the second antenna includes a satellite band is used for description. As shown in FIG. 25, when the electronic device performs communication by using only the second antenna (the first antenna does not operate, and the second antenna operates), the first radiator is used as a parasitic branch of the second antenna, and generates a parasitic resonance near 2.3 GHz.

As shown in FIG. 26, in a satellite band, when the first radiator is used as a parasitic branch, radiation efficiency and total efficiency of the second antenna are improved by about 1.4 dB.

As shown in FIG. 27, when the electronic device performs communication by using only the first antenna (the second antenna does not operate, and the first antenna operates), the second radiator is used as a parasitic branch of the first antenna, and generates a parasitic resonance near 1.85 GHz. As shown in FIG. 28, in an MB band, when the second radiator is used as a parasitic branch, radiation efficiency and total efficiency of the first antenna are improved by about 1.1 dB.

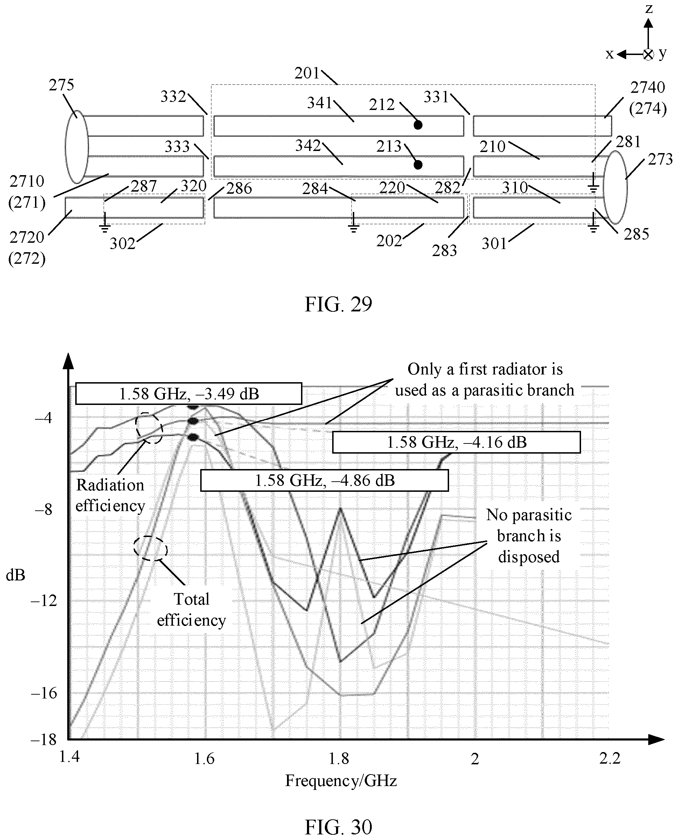

FIG. 29 is a diagram of a foldable electronic device 100 according to an embodiment of this application.

As shown in FIG. 29, the electronic device 100 may further include a third housing 274 and a second hinge 275. The second hinge 275 is located between the first housing 271 and the third housing 274, and the second hinge 275 is rotatably connected to the first housing 271 and the third housing 274, so that the first housing 271 and the third housing 274 can rotate relative to each other.

The first housing 271 includes a first frame 2710, the second housing 272 includes a second frame 2720, and the third housing 274 may include a third frame 2740.

The first frame 2710 includes a first location 281 and a second location 282. The second frame 2720 includes a third location 283 and a fourth location 284. The first radiator 210 is a conductive part between the first location 281 and the second location 282. The second radiator 220 is a conductive part between the third location 283 and the fourth location 284.

It should be understood that, in the foregoing embodiment, only an example in which the foldable electronic device 100 includes only two housings (double-folded electronic device) is used for description. **In**

actual production or design, the technical solutions provided in embodiments of this application may also be applied to (a multi-folded electronic device) including a plurality of housings. As shown in FIG. 25, only an example in which the foldable electronic device 100 includes three housings is used for description.

For brevity of description, in the electronic device 100 shown in FIG. 25, only an example in which the first radiator 210 includes a part of the first frame 2710 and the second radiator 220 includes a part of the second frame 2720 is used for description. **In** actual production or design, the first radiator 210 and the second radiator 220 may alternatively be disposed at other locations. For example, the first radiator 210 includes a part of the third frame 2740 and the second radiator 220 includes the second frame 2720. This is not limited in this embodiment of this application.

**In** an embodiment, the first frame 2710 is coupled to the ground at the first location 281, and the first frame 2710 is provided with a first slot at the second location 282. **In** an embodiment, the second frame 2720 is provided with a second slot at the third location 283, and the second frame 2720 is coupled to the ground at the fourth location 284.

As shown in FIG. 25, when the electronic device 100 is in a folded state, the first slot and the second slot partially overlap in a first direction, the first radiator 210 and the second radiator 220 do not overlap in the first direction, and the first direction is a thickness direction of the electronic device 100, for example, a z direction.

It should be understood that, for brevity of description, this embodiment of this application is described by using only an example in which the radiators in the first antenna 201 and the second antenna 202 operate in a quarter wavelength mode. **In** actual application, the first antenna 201 and the second antenna 202 may alternatively operate in another mode. For example, the first frame 2710 is provided with slots at the first location and the second location 282, and both the first end and the second end of the first radiator 210 are open ends and the first radiator operates in a half wavelength mode.

In an embodiment, when the first radiator 210 operates in the quarter wavelength mode, a length L1 of the first frame 2710 between the first location 281 and the second location 282 and a length L2 of the second frame 2720 between the third location 283 and the fourth location 284 satisfy: $0.5 \times L2 \leq L1 \leq L2$.

In an embodiment, when the first radiator 210 operates in the half wavelength mode, a length L1 of the first frame 2710 between the first location 281 and the second location 282 and a length L2 of the second frame 2720 between the third location 283 and the fourth location 284 satisfy: $L2 \leq L1 \leq 1.5 \times L2$.

In an embodiment, the electronic device 100 may further include a third antenna 301. The third antenna 301 includes a third radiator 310. The second frame 2720 includes a fifth location 285, and the third location 283 is located between the fourth location 284 and the fifth location 285. The third radiator 310 is a conductive part between the third location 283 and the fifth location 285.

In an embodiment, the second frame 2720 is coupled to the ground at the fifth location 285.

In an embodiment, when the electronic device 100 is in a folded state, the first radiator 210 and the third radiator 310 partially overlap in the first direction.

In an embodiment, when the first radiator 210 operates in the quarter wavelength mode, a length L1 of the first radiator (the first frame 2710 between the first location 281 and the second location 282) and a length L3 of the third radiator (the second frame 2720 between the third location 283 and the fifth location 285) satisfy: $L3 \leq L1 \leq 2 \times L3$.

In an embodiment, when the first radiator 210 operates in the half wavelength mode, a length L1 of the first radiator (the first frame 2710 between the first location 281 and the second location 282) and a length L3 of the third radiator (the second frame 2720 between the third location 283 and the fifth location 285) satisfy: $2 \times L3 \leq L1 \leq 3 \times L3$.

In an embodiment, the electronic device 100 may further include a fourth antenna 302. The fourth antenna 302 includes a fourth radiator 320. The second frame 2720 includes a sixth location 286 and a seventh location 287. The sixth location 286 is located between the fourth location 284 and the seventh location 287, and the fourth location 284 is located between the third location 283 and the sixth location 286. The fourth radiator 320 is a conductive part between the sixth location 286 and the seventh location 287.

In an embodiment, the second frame 2720 is provided with a third slot at the sixth location 286, and the second frame 2720 is coupled to the ground at the seventh location 287.

In an embodiment, when the first radiator 210 operates in the quarter wavelength mode, a length L1 of the first radiator (the first frame 2710 between the first location 281 and the second location 282) and a length L4 of the fourth radiator (the second frame 2720 between the sixth location 286 and the seventh location 287) satisfy: $0.7 \times L4 \leq L1 \leq 1.5 \times L4$.

In an embodiment, when the first radiator 210 operates in the half wavelength mode, a length L1 of the first radiator (the first frame 2710 between the first location 281 and the second location 282) and a length L4 of the fourth radiator (the second frame 2720 between the sixth location 286 and the seventh location 287) satisfy $L4 \leq L1 \leq 3 \times L4$.

In an embodiment, the third frame 2740 may further include an eighth location 331 and a ninth location 332. The first antenna 201 includes a fifth radiator 341. The fifth radiator 341 is a conductive part between the eighth location 331 and the ninth location 332.

In an embodiment, the third frame 2740 is provided with a fourth slot at the eighth location 331. When the electronic device 100 is in a folded state, the first slot, the second slot, and the fourth slot at least partially overlap in the first direction.

It should be understood that the fifth radiator 341 may be used as a parasitic branch of the first antenna 201, to improve radiation performance of the first antenna 201. For brevity of description, in this embodiment of this application, only an example in which the third frame 2740 is provided with a slot at the ninth location 332 is used for description. In actual production or design, the third frame 2740 may alternatively be coupled to the ground at the ninth location 332.

In an embodiment, the third frame 2740 further includes a first connection point 212. The first connection point 212 is located between the eighth location 331 and the ninth location 332. The electronic device 100 further includes a fifth switch. A first port of the fifth switch is coupled to the ground, and a second port of the fifth switch is coupled to the first connection point 212. A fifth port of the controller is electrically connected to a control port of the fifth switch, to control a switch status of the fifth switch. In an embodiment, at least one electronic element is electrically connected between the second port of the fifth switch and the first connection point 212. In an embodiment, at least one electronic element is electrically connected between the first port of the fifth switch and the ground.

It should be understood that the fifth switch may be configured to adjust a radiation characteristic of the fifth radiator 341, for example, may be configured to adjust a frequency of a parasitic resonance generated by the fifth radiator 341. In an embodiment, when the electronic device 100 operates by using the first antenna 201, the fifth radiator 341 may be configured to improve a radiation characteristic (for example, operating bandwidth) of the first antenna 201. When the electronic device 100 does not operate by using the first antenna 201, the fifth radiator 341 may be configured to improve a radiation characteristic (for example, operating bandwidth) of the second antenna 202 or the third antenna 301.

**In** an embodiment, the first frame 2710 may further include a tenth location 333, and the second location 282 is located between the tenth location 333 and the first location 281. The first antenna 201 includes a sixth radiator 342. The sixth radiator 342 is a conductive part between the second location 282 and the tenth location 333.

It should be understood that the sixth radiator 342 may be used as a parasitic branch of the first antenna 201, to improve radiation performance of the first antenna 201. For brevity of description, in this embodiment of this application, only an example in which the first frame 2710 is provided with a slot at the tenth location 333 is used for description. **In** actual production or design, the first frame 2710 may alternatively be coupled to the ground at the tenth location 333.

In an embodiment, the third frame 2740 further includes a second connection point 213. The second connection point 213 is located between the second location 282 and the tenth location 333. The electronic device 100 further includes a sixth switch. A first port of the sixth switch is coupled to the ground, and a second port of the sixth switch is coupled to the second connection point 213. A sixth port of the controller is electrically connected to a control port of the sixth switch, to control a switch status of the sixth switch. In an embodiment, at least one electronic element is electrically connected between the second port of the sixth switch and the second connection point 213. In an embodiment, at least one electronic element is electrically connected between the first port of the sixth switch and the ground.

It should be understood that the sixth switch may be configured to adjust a radiation characteristic of the sixth radiator 342, for example, may be configured to adjust a frequency of a parasitic resonance generated by the sixth radiator 342. In an embodiment, when the electronic device 100 operates by using the first antenna 201, the sixth radiator 342 may be configured to improve a radiation characteristic (for example, operating bandwidth) of the first antenna 201. When the electronic device 100 does not operate by using the first antenna 201, the sixth radiator 342 may be configured to improve a radiation characteristic (for example, operating bandwidth) of the second antenna 202 or the third antenna 301.

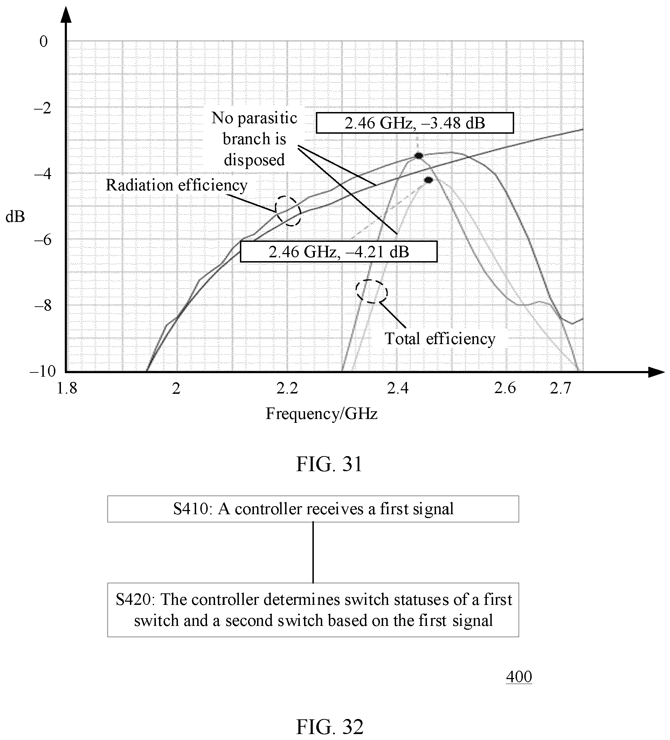

FIG. 30 shows total efficiency and radiation efficiency of a second antenna in the electronic device shown in FIG. 29. FIG. 31 shows total efficiency and radiation efficiency of a third antenna in the electronic device shown in FIG. 29.

It should be understood that, for brevity of description, in the electronic device shown in FIG. 29, only an example in which the operating band of the first antenna includes at least a partial band in a satellite band, the operating band of the second antenna includes an L1 band in GPS, and the operating band of the third antenna includes a Wi-Fi band is used for description.

As shown in FIG. 30, when the electronic device operates by using only the second antenna (the first antenna does not operate, the second antenna operates, and the third antenna does not operate), compared with a case in which no parasitic branch is disposed and only the first radiator is used as a parasitic branch, radiation efficiency of the second antenna is improved by about 0.7 dB, and when the first radiator, the fifth radiator, and the sixth radiator are used as parasitic branches, radiation efficiency of the second antenna is improved by about 1.4 dB.

As shown in FIG. 31, when the electronic device performs communication by using only the second antenna and the third antenna (the first antenna does not operate, the second antenna operates, and the third antenna operates), compared with a case in which no parasitic branch is disposed, and the first radiator, the fifth radiator, and the sixth radiator are used as parasitic branches, radiation efficiency of the third antenna is improved by about 0.7 dB.

FIG. 32 is a diagram of an antenna switching method 400 according to an embodiment of this application. The method may be applied to the electronic device shown in the foregoing embodiments.

S410: A controller receives a first signal, where the first signal indicates an operating status of a second antenna. For example, the operating status of the second antenna may be understood as whether the electronic device performs communication by using the second antenna.

In an embodiment, an AP sends the first signal to the controller. In an embodiment, the electronic device may further include a SoC. The SoC includes the AP, the controller, and a first modem.

In an embodiment, when a second modem is directly electrically connected to the controller through a port, the second modem sends the first signal to the controller.

In an embodiment, the second modem sends a second signal to the AP, where the second signal may include an operating band and service information of the second antenna.

S420: The controller determines switch statuses of a first switch and a second switch based on the first signal.

In an embodiment, the controller may determine, based on the first signal, whether the electronic device performs communication by using the second antenna, and may switch the switch statuses of the first switch and the second switch based on whether the electronic device performs communication by using the second antenna. For example, when the first antenna operates in a cellular band, the second antenna operates in a Wi-Fi band, and the electronic device performs communication by using the second antenna, the controller may switch the switch statuses of the first switch and the second switch, so that a first radiator is used as a parasitic branch of the second antenna, thereby improving a radiation characteristic of the second antenna.

In an embodiment, after the controller determines the switch statuses of the first switch and the second switch based on the first signal, the method may further include: The controller sends a third signal to a switcher, where the third signal indicates the switcher to switch the first switch and the second switch to the switch statuses.

In an embodiment, the switcher is an RF IC.

S430: The first modem sends a fourth signal to the controller, where the fourth signal indicates an operating status of the first antenna. For example, the operating status of the first antenna may be understood as whether the electronic device performs communication by using the first antenna. In an embodiment, the controller determines the switch statuses of the first switch and the second switch based on the first signal and the fourth signal.

In an embodiment, the fourth signal may include an operating band and service information of the first antenna.

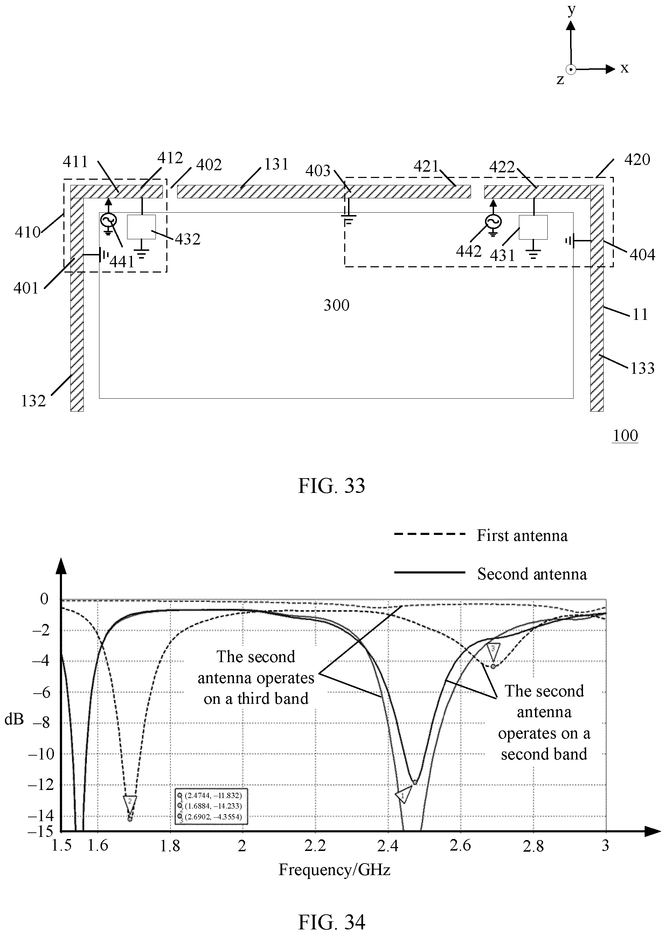

FIG. 33 is a diagram of an electronic device 100 according to an embodiment of this application. As shown in FIG. 33, the electronic device 100 includes a frame 11, a first antenna 410, a second antenna 420, and a ground 300.

At least a part of the frame 11 is spaced from the ground 300.

The frame 11 includes a first location 401, a second location 402, a third location 403, and a fourth location 404 that are successively provided. The second location 402 and the third location 403 are located on a first side 131 of the frame 11. In an embodiment, the first location 401 may be located on a second side 132, and the second side 132 intersects with the first side 131 at an angle. In an embodiment, the fourth location 404 may be located on a third side 133, and the third side 133 intersects with the first side 131 at an angle.

An operating band of the first antenna 410 includes a first band. The first antenna 410 includes a first radiator 411. The first radiator 411 includes a conductive part of the frame between the first location 401 and the second location 402.

Operating bands of the second antenna 420 include a second band and a third band. The second antenna 420 includes a second radiator 421 and a first tuning circuit 431. The second radiator 421 includes a conductive part of the frame 11 between the third location 403 and the fourth location 404. The second radiator 421 includes a first connection point 422, and the first tuning circuit 431 is coupled between the first connection point 422 and the ground 300. The first tuning circuit 431 may be configured to switch an operating band of the second antenna 420.

The first band and the second band are the same or adjacent, and the first band and the third band are not the same or not adjacent. When the first antenna 410 operates on the first band, the first tuning circuit 431 switches the operating band of the second antenna 420 from the second band to the third band.

It should be understood that, according to the technical solution provided in this embodiment of this application, when the first antenna 410 operates on the first band, if the second antenna 420 operates on the second band, because the first band and the second band are the same or adjacent, and the second location 402 and the third location 403 are located on the first side 131 of the frame 11, interference caused by the second antenna 420 to the first antenna 410 is strong, and consequently a radiation characteristic (for example, radiation efficiency) of the first antenna 410 deteriorates. When the first antenna 410 operates on the first band, if the second antenna 420 operates on the third band, the second antenna 420 does not interfere with the first antenna 410, so that the radiation characteristic of the first antenna 410 is improved.

In addition, in this embodiment of this application, that the first tuning circuit 431 switches the operating band of the second antenna 420 from the second band to the third band may be understood as that the second antenna may generate a resonance on the third band, and the electronic device 100 may communicate with an external device on the third band.

In an embodiment, the frame 11 may be coupled to the ground at the first location 401, the third location 403, and the fourth location 404. The frame 11 is provided with a first slot at the second location 402. A first end of the first radiator 411 is a grounding end (an end at the first location 401), and a second end is an open end (an end at the second location 402). Both a first end and a second end of the second radiator 421 are grounding ends.

It should be understood that structures of the first antenna 410 and the second antenna 420 may be determined based on actual production or design. This is not limited in this application.

In an embodiment, the second radiator 421 is provided with a second slot. In an embodiment, the second slot may be located in a central area of the second radiator 421. The central area may be understood as an area that is within 10 mm away from a center of the second radiator 421.

In an embodiment, a length of the frame 11 between the second location 402 and the third location 403 may be less than or equal to three-seconds of a first wavelength. In an embodiment, a length of the frame 11 between the second location 402 and the third location 403 may be less than or equal to a first wavelength. In an embodiment, a length of the frame 11 between the second location 402 and the third location 403 may be less than or equal to a half of a first wavelength. The first wavelength is a wavelength corresponding to the first band.

It should be understood that the wavelength corresponding to the first band may be understood as a vacuum wavelength corresponding to a center frequency of the first band. Because there is a specific correspondence between a vacuum wavelength and a medium wavelength, the vacuum wavelength may be converted into a medium wavelength. Details are not described in this embodiment of this application.

In an embodiment, the length of the frame 11 between the second location 402 and the third location 403 may be less than or equal to 160 mm. In an embodiment, the length of the frame 11 between the second location 402 and the third location 403 may be less than or equal to 120 mm. In an embodiment, the length of the frame 11 between the second location 402 and the third location 403 may be less than or equal to 90 mm. In an embodiment, the length of the frame 11 between the second location 402 and the third location 403 may be less than or equal to 75 mm. In an embodiment, the first antenna 410 may include a first feed circuit 441. The first radiator 411 includes a first feedpoint, and the first feed circuit 441 is coupled to the first feedpoint, to feed an electrical signal.

In an embodiment, the second antenna 420 may include a second feed circuit 442. The second radiator 421 includes a second feedpoint, and the second feed circuit 442 is coupled to the second feedpoint, to feed an electrical signal.

In an embodiment, the first tuning circuit 431 is a circuit including a switch. The switch may be configured to switch between electronic elements with different resistance values, capacitance values, or inductance values that are coupled to the first connection point 422 in different circuit statuses. Alternatively, the switch may be in an off state, so that the electronic element is not coupled to the first connection point 422. Alternatively, the switch may enable the ground 300 to be directly coupled to the first connection point 422, and no electronic element is disposed between the ground 300 and the first connection point 422. For brevity of description, the tuning circuit in embodiments of this application may be correspondingly understood, and details are not described again.

In an embodiment, the first antenna 410 may include a second tuning circuit 432, and the second tuning circuit 432 may be configured to switch an operating band of the first antenna 410. The first radiator 411 includes a second connection point 412, and the second tuning circuit 432 is coupled between the second connection point 412 and the ground 300.

In an embodiment, the operating band of the first antenna 410 further includes a fourth band. The fourth band and the second band are not the same and are not adjacent. When the second antenna 420 operates on the second band, the second tuning circuit 432 switches the operating band of the first antenna 410 from the first band to the fourth band.

It should be understood that when the second antenna 420 operates on the second band, if the second antenna 420 operates on the fourth band, the first antenna 410 does not interfere with the second antenna 420, thereby improving a radiation characteristic of the second antenna 420.

In an embodiment, the electronic device 100 may further include an AP and a first modem. The AP is electrically connected to the first modem, and the first modem is electrically connected to the first tuning circuit 431.

That the first tuning circuit 431 switches the operating band of the second antenna 420 from the second band to the third band when the first antenna 410 operates on the first band includes: The AP sends switching information to the first modem, where the switching information indicates that the operating band of the second antenna 420 is the third band; and the first modem controls, based on the switching information, the first tuning circuit 431 to switch the operating band of the second antenna 420 from the second band to the third band.

In an embodiment, the electronic device 100 may further include a second modem. The AP is electrically connected to the second modem, and the second modem is electrically connected to the second tuning circuit 432.

That the second tuning circuit 432 switches the operating band of the first antenna 410 from the first band to the fourth band when the second antenna 420 operates on the second band includes: The AP sends switching information to the second modem, where the switching information indicates that the operating band of the first antenna 410 is the fourth band; and the second modem controls, based on the switching information, the second tuning circuit 432 to switch the operating band of the first antenna 410 from the first band to the fourth band.

In an embodiment, both the first band and the second band may be partial communication bands in a cellular network, for example, partial communication bands in a low band (698 MHz to 960 MHz), partial communication bands in a middle band (1710 MHz to 2170 MHz), or partial communication bands in a high band (2300 MHz to 2690 MHz).

In an embodiment, the first band and the second band may be communication bands in different communication systems. The first band includes a partial communication band in a non-cellular network. The second band includes a partial communication band in a cellular network, for example, a partial communication band in a middle band (1710 MHz to 2170 MHz), or a partial communication band in a high band (2300 MHz to 2690 MHz).

In an embodiment, the first band is a 2.4G band (2.4 to 2.485 GHz) in Wi-Fi, and the second band is B40 (2.3 to 2.4 GHz) or B41 (2.496 to 2.69 GHz) in LTE. In an embodiment, the first band is an L1 band (1578.42 $\pm$1.023 MHz) in GPS, and the second band is B3 (1.71 to 1.785 GHz) in LTE. In an embodiment, the first modem may be used in a non-cellular network. The second modem may be used in a cellular network.

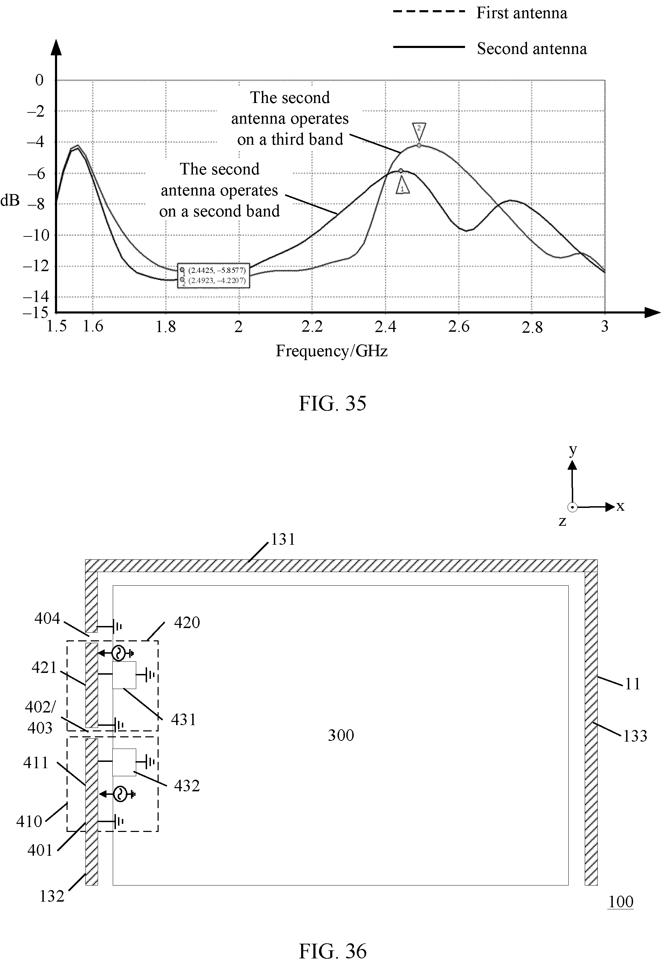

FIG. 34 and FIG. 35 show simulation results of an antenna in the electronic device 100 shown in FIG. 33. FIG. 34 shows a simulation result of S parameters of a first antenna and a second antenna shown in FIG. 33. FIG. 35 shows a simulation result of radiation efficiency of a first antenna shown in FIG. 33.

It should be understood that, for brevity of description, in this embodiment of this application, only an example in which the first band includes a Wi-Fi band (2.4 to 2.485 GHz) and the second band includes B41 (2.496 to 2.69 GHz) in LTE is used for description.

As shown in FIG. 34, when the second antenna operates on the second band, a resonance may be generated near 2.7 GHz, and a corresponding resonant band may include B41 (2.496 to 2.69 GHz) in LTE. In addition, the second antenna operates on the first band or the second band, and has small impact on a resonance generated by the first antenna near 2.4 GHz.

As shown in FIG. 35, when the first antenna operates on the first band, if the second antenna operates on the second band, radiation efficiency of the first antenna is -5.8 dB. When the first antenna operates on the first band, if the second antenna operates on the third band, radiation efficiency of the first antenna is -4.2 dB, and the radiation efficiency is improved by about 1.6 dB. FIG. 36 is a diagram of an electronic device 100 according to an embodiment of this application. As shown in FIG. 36, the second location 402 and the third location 403 are the same (overlapping), and a length of the frame 11 between the second location 402 and the third location 403 is zero. The frame 11 is coupled to the ground 300 at the first location 401. The frame 11 is provided with a first slot and a second slot at the second location 402 and the fourth location 404.

In an embodiment, the first location 401, the second location 402, the third location 403, and the fourth location 404 are all located on the second side 132 of the frame 11.

In an embodiment, a first end of the first radiator 411 is a grounding end (an end at the first location 401), and a second end is an open end (an end at the second location 402). A first end of the second radiator 421 is a grounding end (an end at the third location 403), and a second end is an open end (an end at the fourth location 404). In an embodiment, the second end of the first radiator 411 and the first end of the second radiator 421 are opposite to each other and are not in contact with each other.

It should be understood that a difference between the electronic device 100 shown in FIG. 36 and the electronic device 100 shown in FIG. 33 lies only in a structure of the second antenna 420, and the first location 401, the second location 402, the third location 403, and the fourth location 404. Similar parts between the electronic device 100 shown in FIG. 36 and the electronic device 100 shown in FIG. 33 are not described one by one in detail, for example, a relationship between the first band, the second band, and the third band, a relationship between the tuning circuit, the modem, and the AP, and a structure of the tuning circuit.

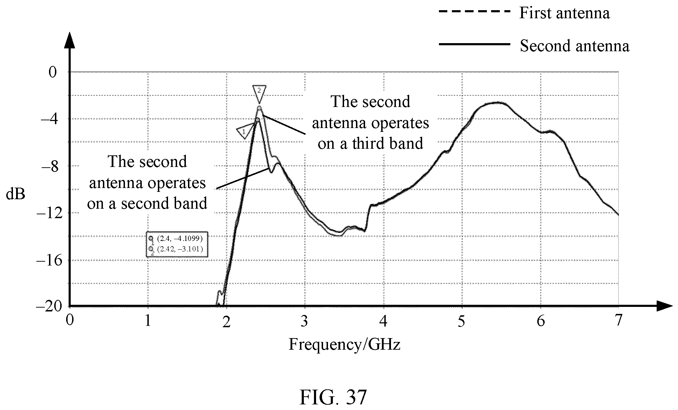

FIG. 37 shows a simulation result of radiation efficiency of a first antenna shown in FIG. 36.

It should be understood that, for brevity of description, in this embodiment of this application, only an example in which the first band includes a Wi-Fi band (2.4 to 2.485 GHz) and the second band includes B41 (2.496 to 2.69 GHz) in LTE is used for description.

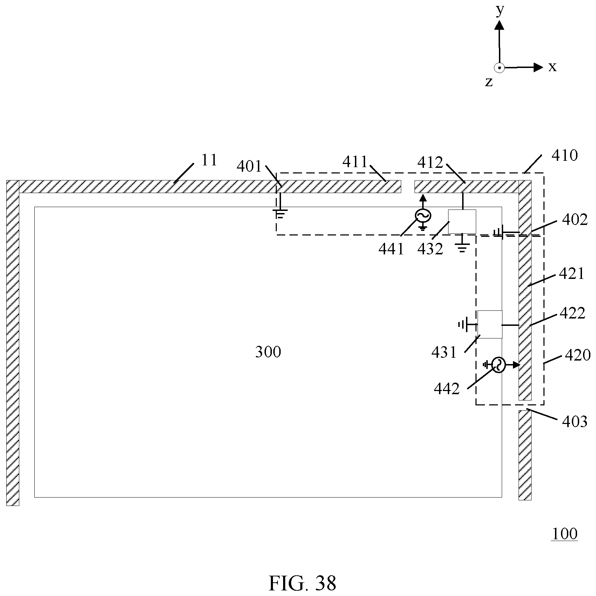

As shown in FIG. 37, when the first antenna operates on the first band, if the second antenna operates on the second band, radiation efficiency of the first antenna is -4.1 dB. When the first antenna operates on the first band, if the second antenna operates on the third band, radiation efficiency of the first antenna is -3.1 dB, and the radiation efficiency is improved by about 1 dB. FIG. 38 is a diagram of an electronic device 100 according to an embodiment of this application. As shown in FIG. 38, the electronic device 100 includes a frame 11, a first antenna 410, a second antenna 420, and a ground 300.

At least a part of the frame 11 is spaced from the ground 300.

The frame 11 includes a first location 401, a second location 402, and a third location 403 that are successively provided. The frame 11 is coupled to the ground 300 at the second location 402. An operating band of the first antenna 410 includes a first band. The first antenna 410 includes a first radiator 411. The first radiator 411 includes a conductive part of the frame between the first location 401 and the second location 402.

Operating bands of the second antenna 420 include a second band and a third band. The second antenna 420 includes a second radiator 421 and a first tuning circuit 431. The second radiator 421 includes a conductive part of the frame 11 between the second location 402 and the third location 403. The second radiator 421 includes a first connection point 422, and the first tuning circuit 431 is coupled between the first connection point 422 and the ground 300. The first tuning circuit 431 may be configured to switch an operating band of the second antenna 420.

The first band and the second band are the same or adjacent, and the first band and the third band are not the same or not adjacent. When the first antenna 410 operates on the first band, the first tuning circuit 431 switches the operating band of the second antenna 420 from the third band to the second band.

It should be understood that, according to the technical solution provided in this embodiment of this application, when the first antenna 410 operates on the first band, if the second antenna 420 operates on the second band, because the first band and the second band are the same or adjacent, when the first radiator 411 generates a main resonance, the second radiator 421 may be excited to generate a parasitic resonance, and a radiation characteristic (for example, radiation efficiency or operating bandwidth) of the first antenna 410 is improved by using the parasitic resonance.

In an embodiment, a length of the frame 11 between the first location 401 and the second location 402 is less than a length of the frame 11 between the second location 402 and the third location 403.

In an embodiment, three-seconds of a length of the frame 11 between the first location 401 and the second location 402 is less than or equal to a length of the frame 11 between the second location 402 and the third location 403.

In an embodiment, the first band and the second band may include at least partial bands in a middle band (middle band, MB) (1710 MHz to 2170 MHz) or at least partial bands in a high band (high band, HB) (2300 MHz to 2690 MHz). The third band may include at least a partial band in a low band (low band, LB) (698 MHz to 960 MHz).

It should be understood that the third band may be generated by a quarter wavelength mode (a fundamental mode) of the second radiator 421, and the second band may be generated by a three-quarters wavelength mode (a higher-order mode) of the second radiator 421. When the first antenna 410 operates on a middle band or a high band, the higher-order mode (for example, the three-quarters wavelength mode) of the second antenna 420 may be excited in a coupling manner to generate a parasitic resonance, so as to improve a radiation characteristic (for example, radiation efficiency or operating bandwidth) of the first antenna.

In an embodiment, a resonance point frequency of the parasitic resonance may be greater than a resonance point frequency of the main resonance, or may be less than a resonance point frequency of the main resonance. This may be determined according to production or design.

In an embodiment, a difference between the resonance point frequency of the parasitic resonance and the resonance point frequency of the main resonance is less than or equal to 200 MHz.

In an embodiment, the frame 11 may be coupled to the ground at the first location 401. The frame 11 is provided with a first slot at the third location 403. Both a first end and a second end of the first radiator 411 are grounding ends. A first end of the second radiator 421 is a grounding end (an end at the second location 402), and a second end is an open end (an end at the third location 403). In an embodiment, the first radiator 411 is provided with a second slot. In an embodiment, the second slot may be located in a central area of the first radiator 411. The central area may be understood as an area that is within 10 mm away from a center of the first radiator 411.

In an embodiment, the first antenna 410 may include a first feed circuit 441. The first radiator 11 includes a first feedpoint, and the first feed circuit 441 is coupled to the first feedpoint, to feed an electrical signal.

In an embodiment, the second antenna 420 may include a second feed circuit 442. The second radiator 421 includes a second feedpoint, and the second feed circuit 442 is coupled to the second feedpoint, to feed an electrical signal.

In an embodiment, the first antenna 410 may include a second tuning circuit 432, and the second tuning circuit 432 may be configured to switch the resonance point frequency of the main resonance generated by the first antenna 410. The first radiator 411 includes a second connection point 412, and the second tuning circuit 432 is coupled between the second connection point 412 and the ground 300.

In an embodiment, the electronic device 100 may further include a modem. The modem is electrically connected to the first tuning circuit 431.

That the first tuning circuit 431 switches the operating band of the second antenna 420 from the third band to the second band when the first antenna 410 operates on the first band includes: The modem controls the first tuning circuit 431 to switch the operating band of the second antenna 420 from the third band to the second band.

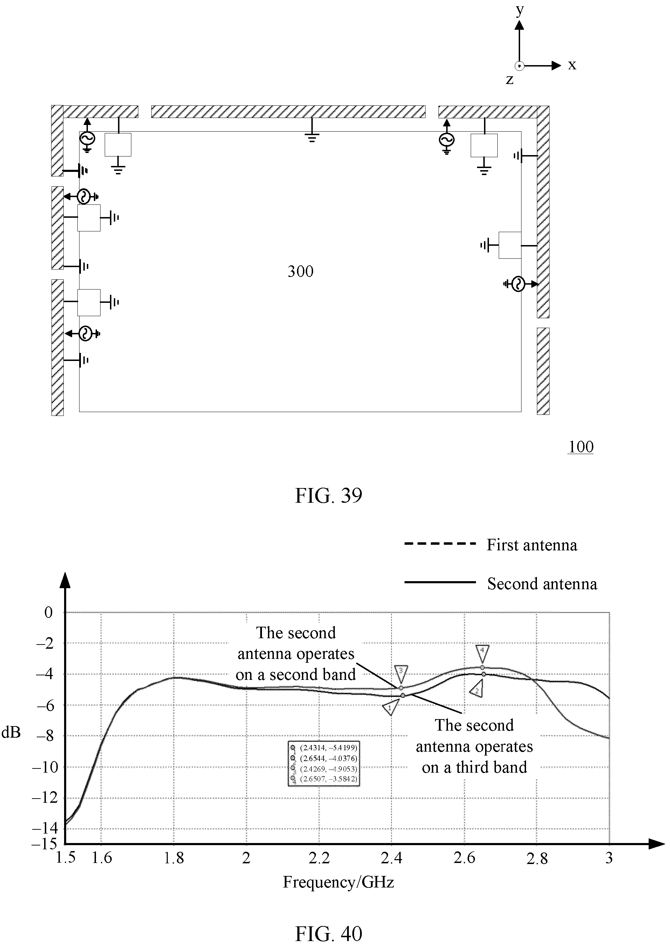

It should be understood that all solutions provided in embodiments of this application may be applied to the electronic device 100. In an embodiment, as shown in FIG. 39, the electronic device 100 may include all of the antennas shown in FIG. 33, FIG. 36, and FIG. 38. This is not limited in embodiments of this application, and may be adjusted based on actual production or design.

FIG. 40 shows a simulation result of radiation efficiency of a first antenna shown in FIG. 38.

It should be understood that, for brevity of description, in this embodiment of this application, only an example in which the first band includes a high band (2300 MHz to 2690 MHz) is used for description.

As shown in FIG. 40, when the first antenna operates on the first band, the second antenna operates on the second band. In the high band, radiation efficiency of the first antenna is improved by about 0.5 dB on average.

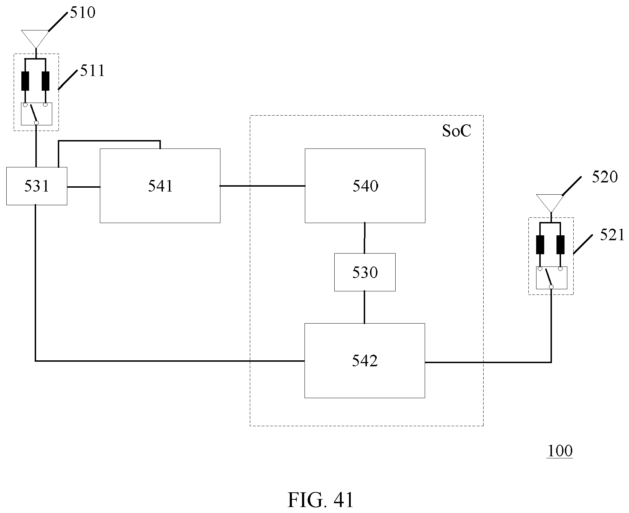

FIG. 41 is a diagram of an electronic device 100 according to an embodiment of this application. As shown in FIG. 41, the electronic device 100 may include a first antenna 510 and a second antenna 520.

It should be understood that structures of the first antenna 510 and the second antenna 520 are not limited in this embodiment of this application. The first antenna 510 and the second antenna 520 may be similar to the first antenna and the second antenna shown in embodiments of this application. In an embodiment, the first antenna 510 and the second antenna 520 may be similar to the first antenna and the second antenna shown in FIG. 6, FIG. 11, FIG. 16, FIG. 19, FIG. 24,

FIG. 29, FIG. 33, FIG. 36, or FIG. 38. For brevity of description, details are not described again. In addition, the first antenna and the second antenna that are similar may be understood as a same boundary condition of radiators of the antennas, a relative location relationship between the first antenna and the second antenna, and the like. The same boundary condition may include whether the radiators include a same grounding end/open end.

The first antenna 510 includes a first tuning circuit 511. In an embodiment, the first tuning circuit 511 may be coupled between a radiator of the first antenna 510 and a ground. The first tuning circuit 511 may be configured to switch a resonance point frequency of a resonance generated by the first antenna 510, so that the first antenna 510 operates on different communication bands.

The second antenna 520 includes a second tuning circuit 521. The second tuning circuit 521 may be coupled between a radiator of the second antenna 520 and the ground. The second tuning circuit 521 may be configured to switch a resonance point frequency of a resonance generated by the second antenna 520, so that the second antenna 520 operates on different communication bands. The electronic device 100 may further include a switch 531, a first modem 541, and a second modem 542. In an embodiment, the first modem 541 may be configured to process an electrical signal sent or received by the first antenna 510. In an embodiment, the second modem 542 may be configured to process an electrical signal sent or received by the second antenna 520.

A connection port of the switch 531 is electrically connected to the first tuning circuit 511.

A first port of the first modem 541 is electrically connected to a control port of the switch 531. A second port of the first modem 541 is electrically connected to a first switching port of the switch 531.

A first port of the second modem 542 is electrically connected to a second switching port of the switch 531. A second port of the second modem 542 is electrically connected to the second tuning circuit 521.

In an embodiment, the control port of the switch 531 may be configured to switch an electrical connection status between the connection port and the first switching port of the switch 531, or control an electrical connection status between the connection port and the second switching port of the switch 531.

It should be understood that, according to the technical solution provided in this embodiment of this application, when the electronic device 100 is in different communication states, an antenna in an idle state (not operating) in the first antenna 510 and the second antenna 520 may improve radiation performance (for example, radiation efficiency) for an operating antenna, so that the electronic device 100 has better communication quality.

When the first antenna 510 and the second antenna 520 operate at the same time, the first modem 541 controls the switch 531 through the first port to electrically connect the connection port to the first switching port. Because the connection port of the switch 531 is electrically connected to the first switching port, the first modem 541 may control the first tuning circuit 511, so that the first antenna 510 operates on a corresponding operating band. The second modem 542 controls the second tuning circuit 521, so that the second antenna 520 operates on a corresponding operating band.

When the first antenna 510 does not operate and the second antenna 520 operates, the second modem 542 controls the second tuning circuit 521, so that the second antenna 520 operates on a corresponding operating band. The first modem 541 controls the switch 531 through the first port to electrically connect the connection port to the second switching port. Because the connection port of the switch 531 is electrically connected to the second switching port, the second modem 542 may control the first tuning circuit 511, so that the radiator of the first antenna 510 is used as a parasitic branch of the second antenna 520, and may be configured to improve radiation performance (for example, radiation efficiency) of the second antenna 520.

In addition, in a process in which the first antenna 510 is used as a parasitic branch of the second antenna 520, when the first antenna 510 needs to perform listening, the first modem 541 controls the switch 531 through the first port to electrically connect the connection port to the first switching port, and the first modem 541 controls the first tuning circuit 511 to enable the first antenna 510 to perform listening on a corresponding operating band. After the listening ends, the first modem 541 controls the switch 531 through the first port to electrically connect the connection port to the second switching port, so that the radiator of the first antenna 510 is used as a parasitic branch of the second antenna 520.

When the first antenna 510 operates and the second antenna 520 does not operate, the first modem 541 controls the switch 531 through the first port to electrically connect the connection port to the first switching port. Because the connection port of the switch 531 is electrically connected to the first switching port, the first modem 541 may control the first tuning circuit 511, so that the first antenna 510 operates on a corresponding operating band. The second modem 542 controls the second tuning circuit 521, so that the radiator of the second antenna 520 is used as a parasitic branch of the first antenna 510, and may be configured to improve radiation performance (for example, radiation efficiency) of the first antenna 510.

In addition, in a process in which the second antenna 520 is used as a parasitic branch of the first antenna 510, when the second antenna 520 needs to perform listening, the second modem 542 controls the second tuning circuit 521 to enable the second antenna 520 to perform listening on a corresponding operating band. After the listening ends, the second modem 542 controls the second tuning circuit 521 to use the radiator of the second antenna 520 as a parasitic branch of the first antenna 510.

In an embodiment, the operating band of the first antenna 510 may be at least a partial communication band in a non-cellular network, for example, a Wi-Fi band, a BT band, or a GPS band, or may include a satellite communication band. In an embodiment, the operating band of the second antenna 520 may include at least a partial communication band in a cellular network, for example, B1 (1920 MHz to 1980 MHz), B3 (1710 MHz to 1785 MHz), and B7 (2500 MHz to 2570 MHz) in LTE.

In an embodiment, the operating band of the first antenna 510 is a 2.4G band in Wi-Fi or an L1 band in GPS. The operating band of the second antenna 520 is a communication band in a range of 1710 MHz to 2170 MHz or a communication band in a range of 2300 MHz to 2690 MHz.

In an embodiment, the electronic device 100 further includes an AP 540 and a controller 530. A first port of the AP 540 is electrically connected to a first port of the controller 530, and a second port of the AP 540 is electrically connected to a third port of the first modem 541. A second port of the controller 530 is electrically connected to a third port of the second modem 542.

In an embodiment, the controller 530 may be a microcontroller unit (microcontroller unit, MCU). It should be understood that the AP 540 may be configured to send an operating status of the first antenna 510 to the controller 530. For example, the operating status of the first antenna 510 may be understood as whether the electronic device 100 performs communication by using the first antenna 510. The second modem 542 may be configured to send an operating status of the second antenna 520 to the controller 530. For example, the operating status of the second antenna may be understood as whether the electronic device 100 performs communication by using the second antenna 520.

When the electronic device 100 performs communication by using only one of the first antenna 510 and the second antenna 520, the controller 530 may control, based on the operating statuses of the first antenna 510 and the second antenna 520, an antenna in an idle state (not operating) to improve radiation performance (for example, radiation efficiency) for an operating antenna, so that the electronic device 100 has better communication quality.

In an embodiment, the AP 540 sends a first signal to the controller 530, and the controller 530 may determine, based on the first signal, whether the electronic device performs communication by using the first antenna 510. The second modem 542 sends a second signal to the controller 530, and the controller 530 may determine, based on the second signal, whether the electronic device performs communication by using the second antenna 520. The controller 530 determines operating statuses of the first tuning circuit 511 and the second tuning circuit 521 based on the first signal and the second signal, so that the antenna generates a corresponding resonance.

In an embodiment, the first signal may include the operating band and service information of the first antenna 510. The second signal may include the operating band and service information of the second antenna 520.

In one embodiment, the controller 530 sends a third signal to the second modem 542. The second modem 542 determines the operating statuses of the first tuning circuit 511 and the second tuning circuit 521 based on the third signal.

In an embodiment, the electronic device includes a first chip, and the first chip includes the controller 530 and the second modem 542. The controller 530 and the second modem 542 are integrated in a same chip.

It should be understood that, if the controller 530 and the second modem 542 are disposed independently, and the controller 530 is connected to the second modem 542 through an interface, a time sequence disorder of transmitted electrical signals may be caused, and a complex processing process is required. When the controller 530 and the second modem 542 are integrated in a same chip (the first chip includes the controller 530 and the second modem 542), the controller 530 and the second modem 542 are bound to each other by using a circuit, and a time sequence disorder of transmitted electrical signals is not caused.

In an embodiment, the electronic device 100 may further include a system on chip (system on chip, SoC). The SoC may include the AP 540, the controller 530, and the second modem 262, and the AP 540, the controller 530, and the second modem 262 are integrated into the SoC.

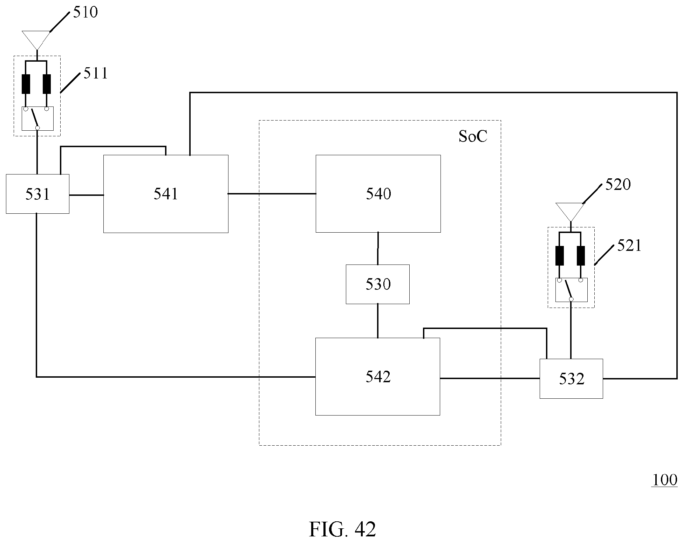

FIG. 42 is a diagram of an electronic device 100 according to an embodiment of this application. As shown in FIG. 42, the electronic device 100 further includes a switch 532.

A connection port of the switch 532 is electrically connected to the second tuning circuit 521. A first switching port of the switch 532 is electrically connected to a fourth port of the first modem 541. A second switching port of the switch 532 is electrically connected to the second port of the second modem 542. A fourth port of the second modem 542 is electrically connected to a control port of the switch 532.

In an embodiment, the control port of the switch 532 may be configured to switch an electrical connection status between the connection port and the first switching port or the second switching port of the switch 532.

It should be understood that a difference between the electronic device 100 shown in FIG. 42 and the electronic device 100 shown in FIG. 41 lies only in the switch 532.

In the electronic device 100 shown in FIG. 41, the first modem 541 may electrically connect the connection port of the switch 531 to the first switching port or the second switching port by using the control port of the switch 531, so that the first modem 541 or the second modem 542 controls the first tuning circuit 511.

In the electronic device 100 shown in FIG. 42, the switch 542 is disposed on the basis of the electronic device 100 shown in FIG. 41. The second modem 542 may electrically connect the connection port of the switch 532 to the first switching port or the second switching port by using the control port of the switch 532, so that the first modem 541 or the second modem 542 controls the second tuning circuit 521.

Therefore, in the electronic device 100 shown in FIG. 42, the first modem 541 and the second modem 542 each may control both the first tuning circuit 511 and the second tuning circuit 521.

When the first antenna 510 and the second antenna 520 operate at the same time, the first modem 541 controls the switch 531 through the first port to electrically connect the connection port of the switch 531 to the first switching port, and the second modem 542 controls the switch 532 through the fourth port to electrically connect the connection port of the switch 532 to the second switching port. The first modem 541 may control the first tuning circuit 511, so that the first antenna 510 operates on a corresponding operating band. The second modem 542 may control the second tuning circuit 521, so that the second antenna 520 operates on a corresponding operating band. When the first antenna 510 does not operate and the second antenna 520 operates, the first modem 541 controls the switch 531 through the first port to electrically connect the connection port of the switch 531 to the second switching port, and the second modem 542 controls the switch 532 through the fourth port to electrically connect the connection port of the switch 532 to the second switching port. The second modem 542 may control both the first tuning circuit 511 and the second tuning circuit 521, so that the radiator of the first antenna 510 is used as a parasitic branch of the second antenna 520, and may be configured to improve radiation performance (for example, radiation efficiency) of the second antenna 520.

In addition, in a process in which the first antenna 510 is used as a parasitic branch of the second antenna 520, when the first antenna 510 needs to perform listening, the first modem 541 controls the switch 531 through the first port to electrically connect the connection port of the switch 531 to the first switching port, and the first modem 541 controls the first tuning circuit 511 to enable the first antenna 510 to perform listening on a corresponding operating band. After the listening ends, the first modem 541 controls the switch 531 through the first port to electrically connect the connection port of the switch 531 to the second switching port, so that the radiator of the first antenna 510 is used as a parasitic branch of the second antenna 520.

When the first antenna 510 operates and the second antenna 520 does not operate, the first modem 541 controls the switch 531 through the first port to electrically connect the connection port of the switch 531 to the first switching port, and the second modem 542 controls the switch 532 through the fourth port to electrically connect the connection port of the switch 532 to the first switching port. The first modem 541 may control both the first tuning circuit 511 and the second tuning circuit 521, so that the radiator of the second antenna 520 is used as a parasitic branch of the first antenna 510, and may be configured to improve radiation performance (for example, radiation efficiency) of the first antenna 510.

In addition, in a process in which the second antenna 520 is used as a parasitic branch of the first antenna 510, when the second antenna 520 needs to perform listening, the second modem 542 controls the switch 532 through the fourth port to electrically connect the connection port of the switch 532 to the second switching port, and the second modem 542 controls the second tuning circuit 521 to enable the second antenna 520 to perform listening on a corresponding operating band. After the listening ends, the second modem 542 controls the switch 532 through the fourth port to electrically connect the connection port of the switch 532 to the first switching port, so that the radiator of the second antenna 520 is used as a parasitic branch of the first antenna 510. Similar parts between the electronic device 100 shown in FIG. 42 and the electronic device 100 shown in FIG. 41 are not described one by one in detail, for example, an antenna in an idle state (not operating) may improve radiation performance for an operating antenna when the electronic device 100 is in different communication states; the operating band of the first antenna 510; the operating band of the second antenna 520; and the electronic device 100 includes the AP 540 and the controller 530.

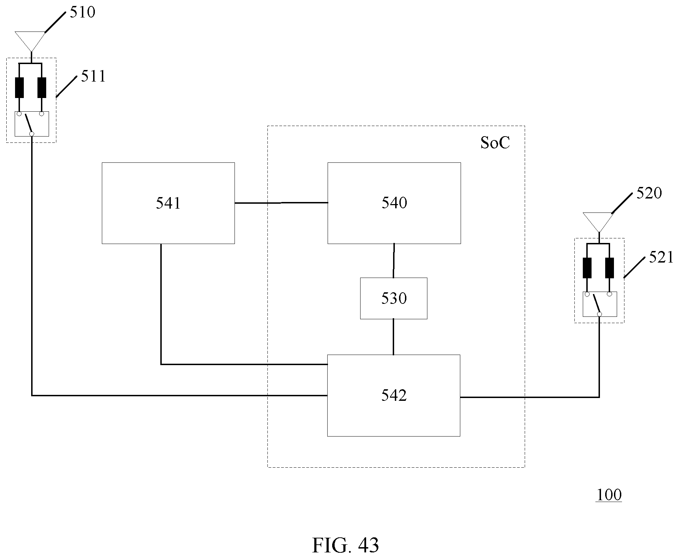

FIG. 43 is a diagram of an electronic device 100 according to an embodiment of this application. As shown in FIG. 43, the electronic device 100 may include a first antenna, a second antenna 520, a first modem 541, and a second modem 542.

The first antenna 510 includes a first tuning circuit 511. In an embodiment, the first tuning circuit 511 may be coupled between a radiator of the first antenna 510 and a ground. The first tuning circuit 511 may be configured to switch a resonance point frequency of a resonance generated by the first antenna 510, so that the first antenna 510 operates on different communication bands.

The second antenna 520 includes a second tuning circuit 521. The second tuning circuit 521 may be coupled between a radiator of the second antenna 520 and the ground. The second tuning circuit 521 may be configured to switch a resonance point frequency of a resonance generated by the second antenna 520, so that the second antenna 520 operates on different communication bands. In an embodiment, the first modem 541 may be configured to process an electrical signal sent or received by the first antenna 510. In an embodiment, the second modem 542 may be configured to process an electrical signal sent or received by the second antenna 520.

A first port of the first modem 541 is electrically connected to a first port of the second modem 542.

A second port of the second modem 542 is electrically connected to the first tuning circuit 511. A third port of the second modem 542 is electrically connected to the second tuning circuit 521.

It should be understood that, according to the technical solution provided in this embodiment of this application, when the electronic device 100 is in different communication states, an antenna in an idle state (not operating) in the first antenna 510 and the second antenna 520 may improve radiation performance (for example, radiation efficiency) for an operating antenna, so that the electronic device 100 has better communication quality.

It should be understood that a difference between the electronic device 100 shown in FIG. 43 and the electronic device 100 shown in FIG. 41 lies only in that the switch 531 is not disposed.

In the electronic device 100 shown in FIG. 41, the first modem 541 may electrically connect the connection port of the switch 531 to the first switching port or the second switching port by using the control port of the switch 531, so that the first modem 541 or the second modem 542 controls the first tuning circuit 511.

However, in the electronic device 100 shown in FIG. 43, the switch 531 is not disposed, and the second modem 542 controls the first tuning circuit 511 and the second tuning circuit 521.

When the first antenna 510 and the second antenna 520 operate at the same time, the second modem 542 may control the first tuning circuit 511 and the second tuning circuit 521, so that the first antenna 510 and the second antenna 520 operate on corresponding operating bands.

When the first antenna 510 does not operate and the second antenna 520 operates, the second modem 542 may control the first tuning circuit 511 and the second tuning circuit 521, so that the second antenna 520 operates on a corresponding operating band, and the radiator of the first antenna 510 is used as a parasitic branch of the second antenna 520, and may be configured to improve radiation performance (for example, radiation efficiency) of the second antenna 520.

In addition, in a process in which the first antenna 510 is used as a parasitic branch of the second antenna 520, when the first antenna 510 needs to perform listening, the first modem 541 sends an electrical signal to the second modem 542. The electrical signal indicates that the first antenna 510 performs listening, and switching to the first tuning circuit 511 is needed. The second modem 542 controls the first tuning circuit 511 to enable the first antenna 510 to perform listening on a corresponding operating band. After the listening ends, the second modem 542 controls the first tuning circuit 511 to use the radiator of the first antenna 510 as a parasitic branch of the second antenna 520.

When the first antenna 510 operates and the second antenna 520 does not operate, the second modem 542 may control the first tuning circuit 511 and the second tuning circuit 521, so that the first antenna 510 operates on a corresponding operating band, and the radiator of the second antenna 520 is used as a parasitic branch of the first antenna 510, and may be configured to improve radiation performance (for example, radiation efficiency) of the first antenna 510.

In addition, in a process in which the second antenna 520 is used as a parasitic branch of the first antenna 510, when the second antenna 520 needs to perform listening, the second modem 542 controls the second tuning circuit 521 to enable the second antenna 520 to perform listening on a corresponding operating band. After the listening ends, the second modem 542 controls the second tuning circuit 521 to use the radiator of the second antenna 520 as a parasitic branch of the first antenna 510.

Similar parts between the electronic device 100 shown in FIG. 43 and the electronic device 100 shown in FIG. 41 are not described one by one in detail, for example, an antenna in an idle state (not operating) may improve radiation performance for an operating antenna when the electronic device 100 is in different communication states; the operating band of the first antenna 510; the operating band of the second antenna 520; and the electronic device 100 includes the AP 540 and the controller 530.

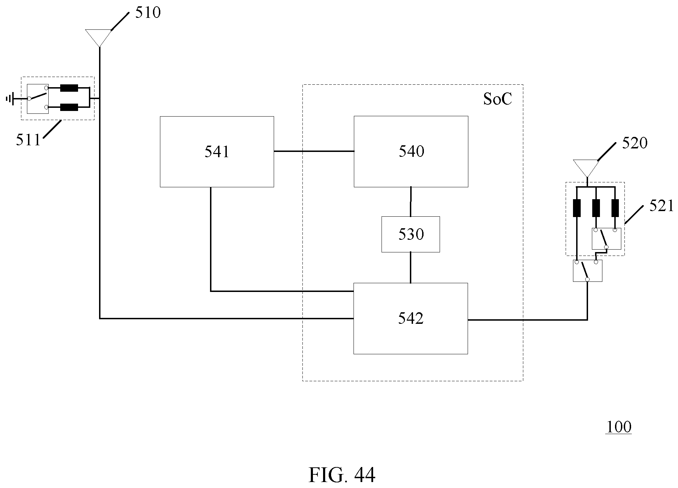

FIG. 44 is a diagram of an electronic device 100 according to an embodiment of this application. For brevity of description, the foregoing embodiment is described by using only an example in which a tuning circuit is connected in series in a circuit (for example, as shown in FIG. 43, the first tuning circuit 511 is connected in series to the first antenna 510 and the second modem 542). In actual production or application, the tuning circuit may alternatively be connected in parallel in the circuit. As shown in FIG. 44, a first end of the first tuning circuit 511 is electrically connected between the first antenna 510 and the second modem 542, and the first end of the first tuning circuit 511 is electrically connected to the ground.

It should be understood that a specific connection manner of the tuning circuit is not limited in embodiments of this application, and may be selected based on factors such as a layout in the electronic device.

In addition, in the foregoing embodiment, only an example in which the tuning circuit includes a single pole double throw (single pole double throw, SPDT) switch is used for description. In actual production or application, the tuning circuit may alternatively include a single pole x throw (single pole x throw, SPXT) switch or an x pole x throw (x pole x throw, XPXT) switch, or the tuning circuit may include a plurality of switches, and is formed by cascading the plurality of switches. As shown in FIG. 44, the second tuning circuit may include two SPDT switches.

It should be understood that a specific form of the tuning circuit is not limited in embodiments of this application, and may be selected based on factors such as a layout in the electronic device. A person of skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical or another form.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. An electronic device, comprising:

   a ground;
   a frame, wherein at least a part of the frame is spaced from the ground, the frame comprises a first location, a second location, a third location, and a fourth location that are successively provided, and the second location and the third location are on a first side of the frame;
   a first antenna, wherein an operating band of the first antenna comprises a first band, and the first antenna comprises:
   a first radiator, wherein the first radiator comprises a conductive part of the frame between the first location and the second location;
   a second antenna, wherein operating bands of the second antenna comprise a second band and a third band, and the second antenna comprises:

      a second radiator, wherein the second radiator comprises a conductive part of the frame between the third location and the fourth location; and
      a first tuning circuit, wherein the second radiator comprises a first connection point, and the first tuning circuit is coupled between the first connection point and the ground, wherein the first band and the second band are the same or adjacent; and

   when the first antenna operates on the first band, the first tuning circuit switches an operating band of the second antenna from the second band to the third band.

2. The electronic device according to claim 1, wherein

   the frame is coupled to the ground at the first location, the third location, and the fourth location, and the frame is provided with a first slot at the second location; and
   the second radiator is provided with a second slot between the third location and the fourth location.

3. The electronic device according to claim 2, wherein a length of the frame between the second location and the third location is less than or equal to a first wavelength, and the first wavelength is a wavelength corresponding to the first band.

4. The electronic device according to claim 2 or 3, wherein the length of the frame between the second location and the third location is less than or equal to 90 mm.

5. The electronic device according to claim 1, wherein

the second location coincides with the third location;
the frame is coupled to the ground at the first location, and the frame is provided with a first slot and a second slot at the second location and the fourth location; and
a first end of the first radiator and a first end of the second radiator are opposite to each other through the first slot and are not in contact with each other, the first end of the first radiator is an open end, and the first end of the second radiator is a grounding end.

6. The electronic device according to any one of claims 1 to 5, wherein

the electronic device further comprises a first modem, a second modem, and a second tuning circuit;
the first radiator comprises a second connection point, and the second tuning circuit is connected between the second connection point and the ground;
the first modem is electrically connected to the first tuning circuit, and the first modem is configured to control the first tuning circuit to switch the operating band of the second antenna;
the second modem is electrically connected to the second tuning circuit, and the second modem is configured to control the second tuning circuit to switch the operating band of the first antenna; and
the first band comprises a partial communication band in a non-cellular network, and the second band comprises a partial communication band in a cellular network.

7. The electronic device according to any one of claims 1 to 6, wherein

the electronic device further comprises an application processor AP and the first modem;

the AP is electrically connected to the first modem;
the first modem is electrically connected to the first tuning circuit; and
that the first tuning circuit switches an operating band of the second antenna from the second band to the third band comprises:

the AP sends switching information to the first modem; and
the first modem controls, based on the switching information, the first tuning circuit to switch the operating band of the second antenna from the second band to the third band.

8. The electronic device according to claim 6, wherein

the first band is a 2.4G band in Wi-Fi, and the second band is B40 or B41 in the cellular network, or the first band is an L1 band in GPS, and the second band is B3 in the cellular network; and
when the electronic device enables the first band, the operating band of the second antenna is switched from the second band to the third band.

9. An electronic device, comprising:

a ground;
a frame, wherein at least a part of the frame is spaced from the ground, the frame comprises a first location, a second location, and a third location that are successively provided, and the frame is coupled to the ground at the second location;
a first antenna, wherein an operating band of the first antenna comprises a first band, and the first antenna comprises:
a first radiator, wherein the first radiator comprises a conductive part of the frame between the first location and the second location;
a second antenna, wherein operating bands of the second antenna comprise a second band and a third band, and the second antenna comprises:

a second radiator, wherein the second radiator comprises a conductive part of the frame between the second location and the third location; and
a tuning circuit, wherein the second radiator comprises a connection point, and the tuning circuit is coupled between the connection point and the ground, wherein

the first band and the second band are the same or adjacent; and

when the first antenna operates on the first band, the tuning circuit switches an operating band of the second antenna from the third band to the second band.

10. The electronic device according to claim 9, wherein

the frame is coupled to the ground at the first location, and the frame is provided with a first slot at the third location; and
the first radiator is provided with a second slot between the first location and the second location.

11. The electronic device according to claim 9 or 10, wherein
the first band and the second band are communication bands in a range of 698 MHz to 960 MHz, or communication bands in a range of 1710 MHz to 2170 MHz, or communication bands in a range of 2300 MHz to 2690 MHz.

12. The electronic device according to any one of claims 9 to 11, wherein

the electronic device further comprises a modem, and the modem is electrically connected to the tuning circuit; and
that the tuning circuit switches an operating band of the second antenna from the third band to the second band comprises:
the modem controls the tuning circuit to switch the operating band of the second antenna from the third band to the second band.

13. An electronic device, comprising:

a first antenna, comprising a first tuning circuit;
a second antenna, comprising a second tuning circuit;
a first switch, wherein a connection port of the first switch is electrically connected to the first tuning circuit;
a first modem, wherein a first port of the first modem is electrically connected to a control port of the first switch, and a second port of the first modem is electrically connected to a first switching port of the first switch; and
a second modem, wherein a first port of the second modem is electrically connected to a second switching port of the first switch, and a second port of the second modem is electrically connected to the second tuning circuit.

14. The electronic device according to claim 13, wherein the control port of the first switch is configured to switch an electrical connection status between the connection port of the first switch and the first switching port of the first switch, or control an electrical connection status between the connection port of the first switch and the second switching port of the first switch.

15. The electronic device according to claim 12 or 13, wherein

the electronic device further comprises a second switch; and
a connection port of the second switch is electrically connected to the second tuning circuit, a first switching port of the second switch is electrically connected to a third port of the first modem, a second switching port of the second switch is electrically connected to the second port of the second modem, and a third port of the second modem is electrically connected to a control port of the second switch.

16. The electronic device according to any one of claims 13 to 15, wherein
an operating band of the first antenna comprises a partial communication band in a non-cellular network, and an operating band of the second antenna comprises a partial communication band in a cellular network.

17. The electronic device according to claim 16, wherein

the electronic device further comprises an application processor AP and a controller;
a first port of the AP is electrically connected to a first port of the controller, and a second port of the AP is electrically connected to a fourth port of the first modem; and
a second port of the controller is electrically connected to a fourth port of the second modem.

18. The electronic device according to any one of claims 13 to 17, wherein the operating band of the first antenna is a 2.4G band in Wi-Fi or an L1 band in GPS, and the operating band of the second antenna is a communication band in a range of 1710 MHz to 2170 MHz or a communication band in a range of 2300 MHz to 2690 MHz.

19. An electronic device, comprising:

a first antenna, comprising a first tuning circuit;
a second antenna, comprising a second tuning circuit; and
a first modem and a second modem, wherein a first port of the first modem is electrically connected to a first port of the second modem, a second port of the second modem is electrically connected to the first tuning circuit, and a third port of the second modem is electrically connected to the second tuning circuit.

20. The electronic device according to claim 19, wherein an operating band of the first antenna comprises a partial communication band in a non-cellular network, and an operating band of the second antenna comprises a partial communication band in a cellular network.

21. The electronic device according to claim 20, wherein

the electronic device further comprises an application processor AP and a controller;
a first port of the AP is electrically connected to a first port of the controller, and a second port of the AP is electrically connected to a fourth port of the first modem; and
a second port of the controller is electrically connected to a fourth port of the second modem.

22. The electronic device according to any one of claims 19 to 21, wherein the operating band of the first antenna is a 2.4G band in Wi-Fi or an L1 band in GPS, and the operating band of the second antenna is a communication band in a range of 1710 MHz to 2170 MHz or a communication band in a range of 2300 MHz to 2690 MHz.

FIG. 1

100

111
122/124
123
112
125    121

FIG. 2

100
110
126    125    127    129    128

FIG. 3

FIG. 4

FIG. 5

FIG. 6

FIG. 7

FIG. 8

FIG. 9

FIG. 10

x ← ⊙ z
↓ y

283
220    284    310    285    2710

253  245
222
282
242
251
210  211  241  231
281

100

FIG. 11

FIG. 12

FIG. 13

FIG. 14

FIG. 15

FIG. 16

FIG. 17

FIG. 18

FIG. 19

A first radiator
is used as a
parasitic branch

FIG. 20

FIG. 21

FIG. 22

FIG. 23

FIG. 24

FIG. 25

FIG. 26

FIG. 27

FIG. 28

FIG. 29

FIG. 30

No parasitic branch is disposed

2.46 GHz, −3.48 dB

Radiation efficiency

2.46 GHz, −4.21 dB

Total efficiency

dB

Frequency/GHz

FIG. 31

S410: A controller receives a first signal

S420: The controller determines switch statuses of a first switch and a second switch based on the first signal

400

FIG. 32

FIG. 33

FIG. 34

FIG. 35

FIG. 36

FIG. 37

FIG. 38

y

x

z

300

100

FIG. 39

- - - - - - First antenna

———— Second antenna

The second
antenna operates
on a second band

The second
antenna operates
on a third band

(2.4314, −5.4199)
(2.6544, −4.0376)
(2.4269, −4.9053)
(2.6507, −3.5842)

dB

0
−2
−4
−6
−8
−10
−12
−14
−15

1.5    1.6    1.8    2    2.2    2.4    2.6    2.8    3

Frequency/GHz

FIG. 40

FIG. 41

510

511

SoC

520

521

531

541

540

530

542

532

100

FIG. 42

FIG. 43

510

SoC

520

541 540 521

530

542

100

FIG. 44

511

## INTERNATIONAL SEARCH REPORT

| International application No. |
| --- |
| **PCT/CN2024/099763** |

| **A.** | **CLASSIFICATION OF SUBJECT MATTER** |
| --- | --- |

H04M 1/02(2006.01)i

According to International Patent Classification (IPC) or to both national classification and IPC

| **B.** | **FIELDS SEARCHED** |
| --- | --- |

Minimum documentation searched (classification system followed by classification symbols)

IPC: H04M H01Q

Documentation searched other than minimum documentation to the extent that such documents are included in the fields searched

Electronic data base consulted during the international search (name of data base and, where practicable, search terms used)

EPTXT; USTXT; VEN; WOTXT; CNABS; CNTXT; CNKI: 多, 二, 两, 天线, 边框, 壳, 间隙, 缝隙, 切换, 变为, 调整, 频段, 频率, multi, second, antenna, bezel, housing, gap, switch, frequency

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 114530691 A (GUANGDONG OPPO MOBILE COMMUNICATIONS CO., LTD.) 24 May 2022 (2022-05-24) <br> description, paragraphs [0035]-[0142], and figures 1-24 | 1-12 |
| Y | CN 114530691 A (GUANGDONG OPPO MOBILE COMMUNICATIONS CO., LTD.) 24 May 2022 (2022-05-24) <br> description, paragraphs [0035]-[0142], and figures 1-24 | 13-22 |
| Y | CN 112151960 A (HUAWEI TECHNOLOGIES CO., LTD.) 29 December 2020 (2020-12-29) <br> description, paragraphs [0002]-[0268], and figures 1-25 | 13-22 |
| A | CN 112086753 A (GUANGDONG OPPO MOBILE COMMUNICATIONS CO., LTD.) 15 December 2020 (2020-12-15) <br> entire document | 1-22 |
| A | WO 2021141470 A1 (SAMSUNG ELECTRONICS CO., LTD.) 15 July 2021 (2021-07-15) <br> entire document | 1-22 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **12 September 2024** | **19 September 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/099763**

| Patent document cited in search report | | | Publication date (day/month/year) | Patent family member(s) | | | Publication date (day/month/year) |
|---|---|---|---|---|---|---|---|
| CN | 114530691 | A | 24 May 2022 | None | | | |
| CN | 112151960 | A | 29 December 2020 | None | | | |
| CN | 112086753 | A | 15 December 2020 | None | | | |
| WO | 2021141470 | A1 | 15 July 2021 | KR | 20210090520 | A | 20 July 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310802738

- CN 202311615641